(19) **Europäisches Patentamt / European Patent Office / Office européen des brevets**

(11) **EP 1 758 378 A2**

(12) # EUROPEAN PATENT APPLICATION

(43) Date of publication:
**28.02.2007 Bulletin 2007/09**

(51) Int Cl.:
**H04N 5/44** (2006.01)

(21) Application number: **06119580.6**

(22) Date of filing: **25.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.08.2005 JP 2005245978**

(71) Applicants:
• **Pioneer Corporation**
  **Meguro-ku,**
  **Tokyo (JP)**

• **Pioneer Plasma Display Corporation**
  **Izumi, Kagoshima Prefecture (JP)**

(72) Inventor: **Yamashita, Taketoshi,**
**Pioneer Plasma Display Corp.**
**Kagoshima (JP)**

(74) Representative: **Betten & Resch**
**Patentanwälte,**
**Theatinerstrasse 8**
**80333 München (DE)**

(54) **Scanning-line interpolating circuit, scanning-line interpolating method to be used in same circuit, and image display device provided with same circuit**

(57)     A scanning-line interpolating circuit (78) is provided which is capable of reducing jaggies on slanting lines and of keeping smoothness of interpolating signals achieved by using slanting lines having multiple angles for interpolation and of suppressing failures in displaying caused by erroneous judgement. When it is judged that there is matching in pixel data between three pixels or more on an upper line and three pixels or more on a lower line,
an interpolating angle judging signal (a) is corrected to be another interpolating angle judging signal (n) corresponding to interpolation in up-and-down directions and isolated point is removed and another interpolating angle judging signal (p) is output. Interpolating signals (d,..., m) are blended with other interpolating signals corresponding to interpolation in same directions and at different angles and another interpolating signals (dz,..., mz) are produced. One of second interpolating signals (c, dz,..., mz) is selected based on the interpolating angle judging signal (p) and an interpolating signal (x) is produced.

FIG.4

51 Slanting Interpolation Judging Section — a
52 Interpolating Angle Correcting Section — n
53 Isolated Point Removing Section — p

54 Upper and Lower Line Matching Degree Judging Section — b

55 Interpolating Signal Producing Section (For Up-and-Down Interpolation) — c
56 Interpolating Signal Producing Section (For + 45°) — d — dz
57 Interpolating Signal Producing Section (For −45°) — e — ez
58 Interpolating Signal Producing Section (For + 31°) — f — fz
59 Interpolating Signal Producing Section (For −31°) — g — gz
60 Interpolating Signal Producing Section (For + 23°) — h — hz
61 Interpolating Signal Producing Section (For −23°) — i — iz
62 Interpolating Signal Producing Section (For + M°) — k — kz
63 Interpolating Signal Producing Section (For −M°) — m — mz

Video Input Signal "in"

x;Interpolating Signal

64;Interpolating Signal Blendinng Section
65;Interpolating Signal Selecting Section

EP 1 758 378 A2

**Description**

Field of the Invention

The present invention relates to a scanning-line interpolating circuit, a scanning-line interpolating method and an image display device, and more particularly to the scanning-line interpolating circuit and the scanning-line interpolating method to be used for the scanning-line interpolating circuit, and an image display device provided with the scanning-line interpolating circuit, which are employed in such a case in which, in display devices including plasma display panels, liquid crystal display devices, cathode-ray tubes using a progressive scanning method, and a like, when a video input signal is converted from an interlaced scanning signal to a progressive scanning signal, a correlation is judged among pixel data on a plurality of pixels located in vertical and oblique directions and, based on the result from the judgement, interpolated pixels are generated.

The present application claims priority of Japanese Patent Application No. 2005-245978 filed on August 26, 2005, which is hereby incorporated by reference.

Description of the Related Art

When a video input signal such as a television signal is converted from an interlaced scanning-line signal to a progressive scanning-line signal, in the case of motion video signals, there is a weak correlation among data blocks during each field and, therefore, interpolation on the motion video signal is performed by using information having a strong correlation among the data blocks during the same field. In such a situation, if the interpolated signals are produced only based on a mean value of pixel data blocks on up and down scanning lines which sandwiches an interpolating pixel on a scanning line for interpolation, when a slanting line is displayed on a display screen, edges of the slanting line are jagged, that is, "jaggies" occur on an image to be displayed. Various scanning-line interpolating methods are proposed to reduce such "jaggies" on slanting lines on the display screen.

One example of such scanning-line interpolating methods is a slanting correlation adaptive-type of scanning-line interpolating method.

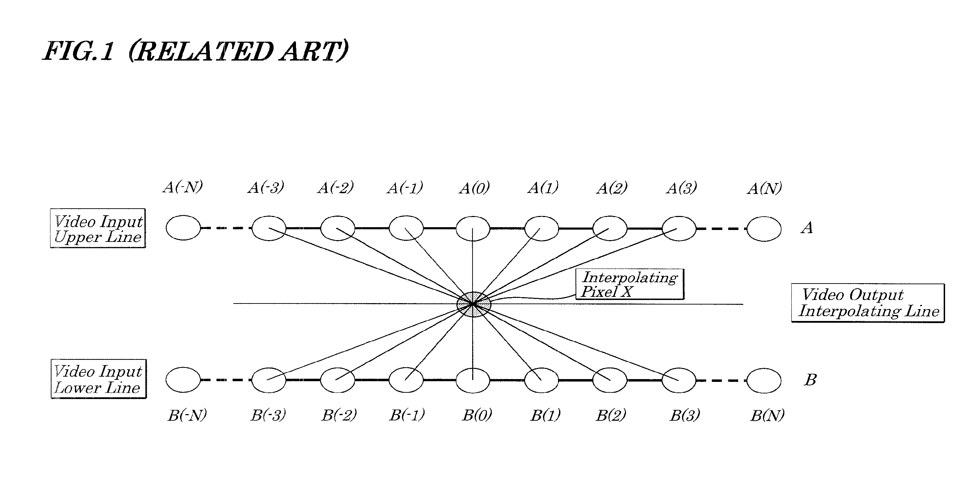

In the slanting correlation adaptive-type scanning-line interpolating method, for example, as shown in Fig. 1, it is here assumed, to explain the conventional method, that a pixel A(0) corresponding to an interpolating pixel X on a K-1st scanning line (on a video input upper line) located above the K-th ("K" is an integer of 2 or more) scanning line on which the interpolating pixel X (interpolating pixel X) exists, pixels A(-1), A(-2), A(-3), ⋯, and A(-N) ("N" is a positive integer) arranged in order approaching the pixel A(0) occurring on a left side of the pixel A(0) on the K-1st scanning line, and pixels A(1), A(2), A(3), ⋯, and A(N) arranged in order approaching the pixel A(0) existing on a right side of the pixel A(0) on the K-1st scanning line are provided. It is also assumed that a pixel B(0) corresponding to the interpolating pixel X on the K+1st scanning line (on a video input lower line) located below relative to the interpolating pixel X, pixels B(-1), B(-2), B(-3), ⋯, and B(-N) (N is a positive integer) arranged in order approaching the pixel B(0) occurring on a left side of the pixel B(0) on the K+ 1st scanning line and pixels B(1), B(2), B(3), ⋯, B(N) arranged in order approaching the pixel B(0) occurring on a right side of the pixel B(0) on the K+1st scanning line are provided.

According to the conventional technology, an absolute value of a difference between data on a pixel A(0) located upward relative to the interpolating pixel X and data on a pixel B(0) located downward relative to the interpolating pixel X, an absolute value of a difference between data on a pixel A(m) ("m" is a positive integer) located in an oblique direction relative to the interpolating pixel X and data on a pixel B (-m) also located in an oblique direction relative to the interpolating pixel X and an absolute value of a difference between data on a pixel A(-m) in other oblique direction relative to the interpolating pixel X and data on a pixel B (m) in the other direction relative to the interpolating pixel X are compared with one another and it is judged from results from the comparison that there is a strong correlation in the direction in which the smallest absolute value is obtained. In this case, when there is a strong correlation in up-and-down directions, a mean value of pixel data on the pixel A(0) and the pixel B(0) is defined as pixel data to be used for interpolation of the pixel to be interpolated X. Also, when there is a strong correlation in the oblique direction and when an absolute value of a difference in pixel data between the pixel A(m) and pixel B(-m) is the smallest, a mean value of pixel data of the pixel A(m) and pixel A(-m) is defined as pixel data to be used for interpolation of the interpolating pixel X. Furthermore, when there is a strong correlation in the oblique direction and when an absolute value of a difference in pixel data between the pixel A(-m) and the pixel B(m) is the smallest, a mean value of pixel data of the pixel A(-m) and the pixel B(m) is defined as pixel data to be used for interpolation of the interpolating pixel X. By using the above definition and comparison, jaggies on slanting lines are reduced.

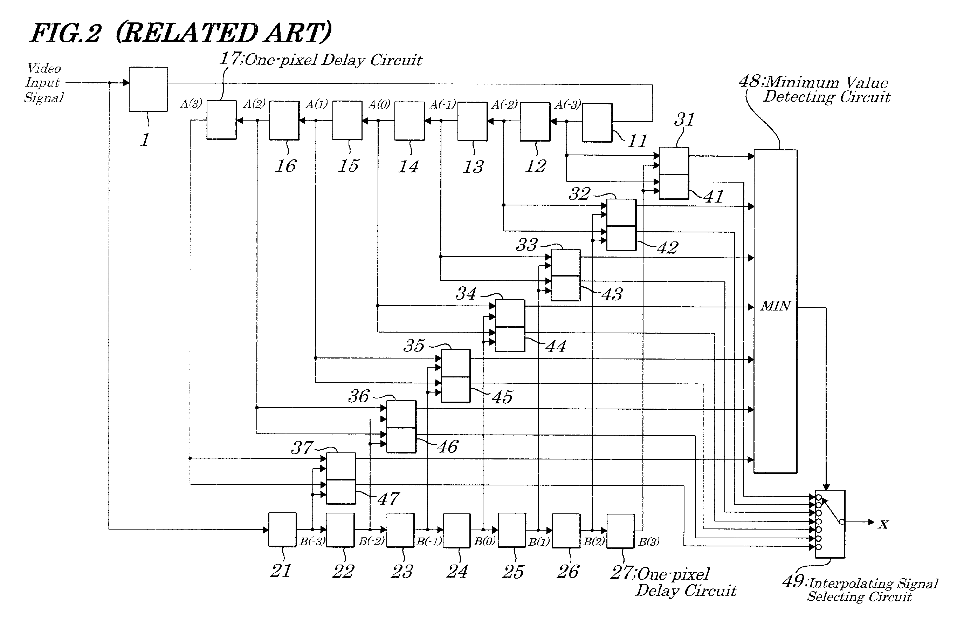

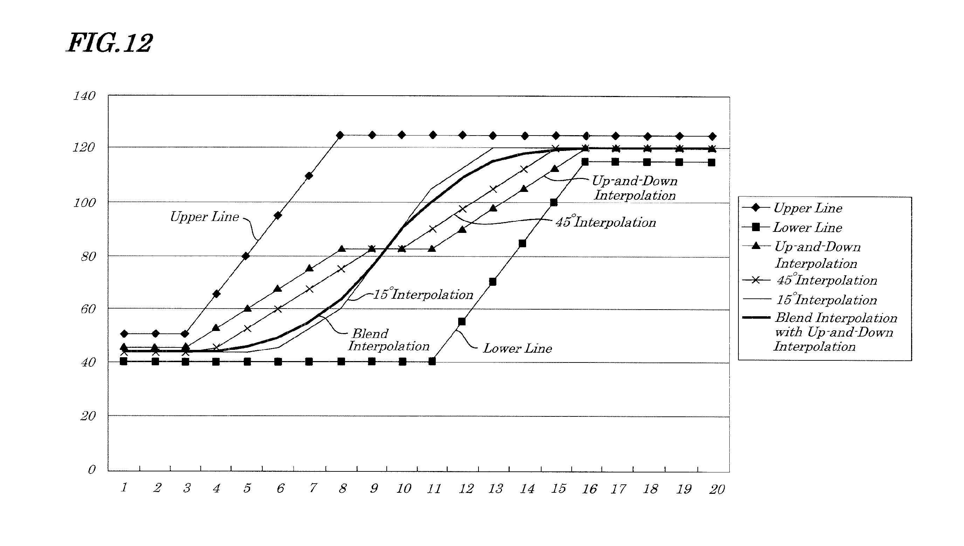

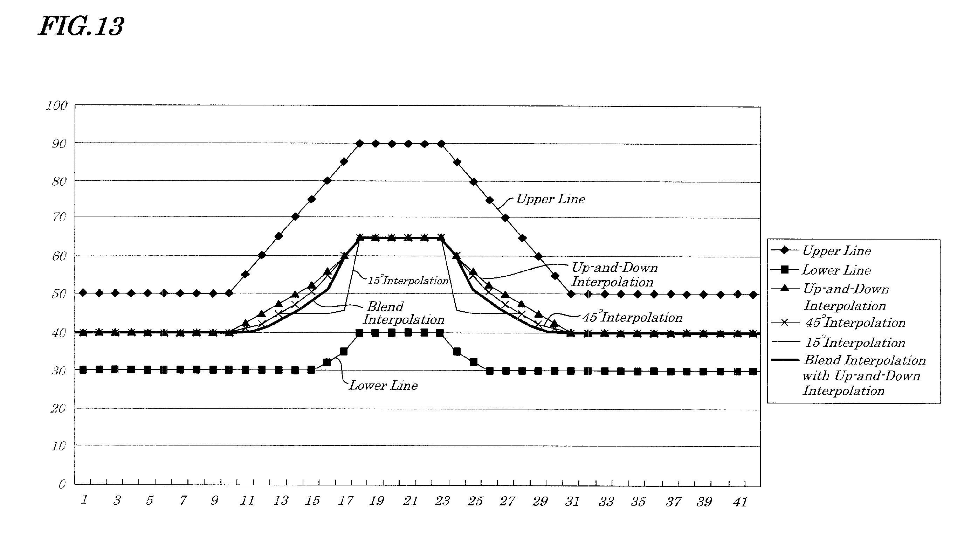

Conventional technologies of this type are disclosed in the following Patent References. Figure 2 is a block diagram showing electrical configurations of a conventional scanning-line interpolating device (circuit) disclosed in Patent Reference 1 (Japanese Patent Application Laid-open No. 2003-18397, Page 3, Fig. 12). The disclosed scanning-line interpolating device, as shown in Fig. 2, includes a one-line delay circuit 1, one-pixel delay circuits 11, 12, 13, 14, 15, 16, and 17, one-pixel delay circuits 21, 22, 23, 24, 25, 26, and 27, difference absolute value calculating circuit 31, 32, 33, 34, 35, 36, and 37, mean value calculating circuits 41, 42, 43, 44, 45, 46, and 47, a minimum value detecting circuit 48, and an interpolating signal selecting circuit 49.

In the conventional scanning-line interpolating device (circuit), a video input signal "in" being an interlaced scanning signal is input through the one-line delay circuit 1 sequentially to the one-pixel delay circuits 11, 12, 13, 14, 15, 16, and 17 and is directly input sequentially to the one-pixel delay circuits 21, 22, 23, 24, 25, 26, and 27. Then, pixel data of each of the pixels A(-3), A(-2), A(-1), A(0), A(1), A(2), and A(3) to be supplied to the K-1$^{st}$ scanning line is output from the one-pixel delay circuits 11, 12, 13, 14, 15, 16, and 17. Also, pixel data of each of the pixels B(-3), B(-2), B(-1), B(0), B(1), B(2), and B(3) to be supplied to the second scanning line is output from the one-pixel delay circuits 21, 22, 23, 24, 25, 26, and 27.

The pixel data blocks of each of the pixels A(3), A(2), A(1), A(0), A(-1), A(-2), A(-3) and each of the pixels B(-3), B(-2), B(-1), B(0), B(1), B(2), and B(3) are input respectively to the difference absolute calculating circuits 31, 32, 33, 34, 35, 36, and 37, and absolute values of each difference between the pixel on the upper scanning line and the pixel on the lower scanning line |A(-3)-B(3)|, |A(-2)-B(2)|, |A(-1)-B(1)|, |A(0)-B(0)|, |A(1)-B(-1)|, |A(2)-B(-2)|, and |A(3)-B(-3)| are output from the difference absolute calculating circuits 31, 32, 33, 34, 35, 36, and 37.

The pixel data blocks of each of the pixels A(3), A(2), A(1), A(0), A(-1), A(-2), and A(-3) and each of the pixels B(-3), B(-2), B(-1), B(0), B(1), B(2), and B(3) are input respectively to the mean value calculating circuits 41, 42, 43, 44, 45, 46, and 47, and mean values [A(-3)+B(3)]/2, [A(-2)+B(2)]/2, [A(-1)+B(1)]/2, [A(0)+B(0)]/2, [A(1)+B(-1)]/2, [A(2)+B(-2)]/2, and [A(3)+B(-3)]/2 are output. A minimum value of the above absolute values of the above differences is detected by the minimum value detecting circuit 48 and an output from each of the mean value calculating circuits 41, 42, 43, 44, 45, 46, and 47 corresponding to a pair of pixels existing in the direction and at the angle where the minimum value is detected by the minimum value detecting circuit 48 is selected by the interpolating signal selecting circuit 49 and is output as pixel data to be used for interpolation of the interpolating signal x.

Moreover, in the scanning-line interpolating device disclosed in Patent Reference 2 (Japanese Patent Application Laid-open No. 2002-185934, Page 10, Fig. 1), an interpolating signal is produced by an interpolating signal producing means by blending a value for interpolation in an oblique direction with a value for interpolation in up-and-down directions. That is, when a difference value of pixel data between pixels occurring in an oblique direction relative to an interpolating pixel is between a first value and a second value, a value of the interpolating pixel is calculated by using the first interpolating value obtained by using pixels occurring in a vertical direction and a second interpolating value obtained using pixels occurring in an oblique direction and, therefore, smooth interpolating process is performed in an image containing edges in an oblique direction.

However, the conventional scanning-line interpolating devices as described above have the following problems. That is, in the conventional scanning-line interpolating device as shown in Fig. 2, a minimum value of an absolute value of a difference is detected by the minimum value detecting circuit 48, however, if information about an angle of an oblique line increases, in some cases, a minimum value obtained in a direction being reverse to a direction in which a minimum value is detected is employed in an actual interpolating processing and, as a result, erroneous judgement is made, which causes a flicker, bright point, dark point, or a like to occur on a display screen.

Also, the scanning-line interpolating device disclosed in the Patent Reference 2 has a problem in that, since data for interpolation, in up-and-down directions and data for oblique directions are blended, one half the effectiveness of interpolation in the oblique direction is lost. Moreover, if the data for the interpolation in up-and-down directions and data for the interpolation in the oblique direction are not blended at all, when an interpolating signal obtained by judgement for interpolation in the oblique direction and an interpolating signal obtained by judgement for interpolation in the up-and-down directions are adjacent to each other, the obtained interpolating curve is not smooth, which causes pseudo-edges to occur and a display screen to be unnatural.

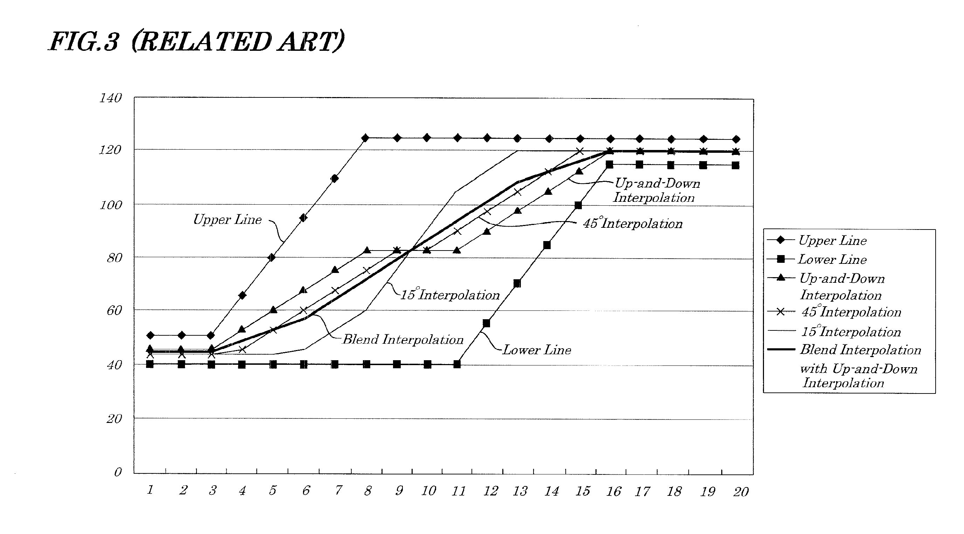

Figure 3 is a diagram showing effects of interpolation performed by the conventional scanning-line interpolating device disclosed in the Patent Reference 2 and shown in Fig. 2, in which pixel numbers are plotted as abscissa and pixel data as ordinate. In Fig. 3, an "upper line" shown by a broken line represents an interlaced scanning signal to be supplied to the K-1$^{st}$ scanning line. A "lower line" shown by a broken line represents an interlaced scanning signal to be supplied to the K+1$^{st}$ scanning line. Other broken lines represent interpolating signals produced by using the interlaced scanning signal to be supplied thereto. An "up-and-down interpolating line" shown by a broken line is plotted by using mean values of pixel data blocks at two points using pixels located in a vertical direction on the upper and lower lines being symmetric with respect to a point of the interpolating pixel X. A "slanting 45° interpolating line" shown by a broken line is plotted by using mean values of pixel data blocks at two points using pixels out of three pixels, each being a square pixel, located in an oblique direction on the upper and lower lines being symmetric with respect to a point of the interpolating pixel X. A "slanting 15° interpolating line" shown by a broken line is plotted by using mean values of pixel data blocks at two points using pixels existing in an outermost place out of 11 pixels, each being a square pixel, located on the upper and lower lines being symmetric with respect to a point of the interpolating pixel X. A "blend interpolating line" shown by a broken line is plotted by using a mean value of pixel data blocks obtained by data for the up-and-down interpolation and data for the slanting 15° interpolation. The slope of the blend interpolating line becomes gentle compared with that of the slanting 15° interpolating line which shows a problem in that one half the effectiveness of the interpolation in an oblique direction is lost when compared with the case of using only the slanting 15° interpolation. The problems to be solved by the present invention includes the problems described above as examples.

SUMMARY OF THE INVENTION

In view of the above, it is an object of the present invention to provide a scanning-line interpolating circuit which is capable of reducing "jaggies" on slanting lines and of keeping smoothness of interpolating signals achieved by using slanting lines having multiple angles for interpolation and of suppressing failures in displaying caused by erroneous judgement for interpolation.

According to a first aspect of the present invention, there is provided a scanning-line interpolating circuit for creating pixel data for an interpolating pixel based on pixel data of a plurality of first pixels on a scanning line occurring at least one line forward relative to a scanning line on which the interpolating pixel exists and on pixel data of a plurality of second pixels on a scanning line occurring at least one line backward relative to the scanning line on which the interpolating pixel exists, including:

> an interpolating angle judging unit to judge an angle, relative to a direction of the scanning line on which the interpolating pixel exists, at which there is a strongest correlation between one of pixel data blocks of the first plurality of pixels and one of pixel data blocks of the second plurality of pixels located on a straight line passing through the interpolating pixel; and
> a pixel data matching degree judging unit to judge a degree of matching in pixel data between a first central pixel, out of the plurality of first pixels, located on a scanning line whose direction is same as that of the scanning line on which the interpolating pixel exists and each of first reference pixels including specified pixels occurring on a periphery of the first central pixel and a second central pixel, out of the plurality of second pixels, located on the scanning line whose direction is same as that of the scanning line on which the interpolating pixel exists and each of second reference pixels including specified pixels occurring on a periphery of the second pixels,

wherein, when the degree of matching is higher than a predetermined specified value, interpolation in a direction vertical to a direction of the scanning line on which the interpolating pixel exists is performed and when the degree of matching is smaller than the predetermined specified value, interpolation at an angle, judged by the interpolating angle judging unit, in a direction corresponding to an angle providing a strongest correlation in pixel data is performed.

According to a second aspect of the present invention, there is provided a scanning-line interpolating circuit for creating pixel data for an interpolating pixel based on pixel data of a plurality of first pixels on a scanning line occurring at least one line forward relative to a scanning line on which the interpolating pixel exists and on pixel data of a plurality of second pixels on a scanning line occurring at least one line backward relative to the scanning line on which the interpolating pixel exists, including:

> an interpolating angle judging unit to judge an angle, relative to a direction of the scanning line on which the interpolating pixel exists, at which there is a strongest correlation between one of pixel data blocks of the first plurality of pixels and one of pixel data blocks of the second plurality of pixels located on a straight line passing through the interpolating pixel;

wherein the interpolating angle judging unit detects an angle at which there is a strongest correlation among pixel data blocks for interpolation for the interpolating pixel and specified pixels to be interpolated occurring on a periphery of the interpolating pixel on the scanning line on which the interpolating pixel exists and, if the detected first angle at which there is the strongest correlation among pixel data blocks for interpolation of the interpolating pixel has a weak correlation with a second angle at which there is the strongest correlation among pixel data blocks for interpolation of pixels to be interpolated occurring on a periphery of the interpolating pixel, the first angle is replaced with an angle providing a stronger correlation with the second angle.

According to a third aspect of the present invention, there is provided a scanning-line interpolating circuit for creating pixel data for an interpolating pixel based on pixel data of a plurality of first pixels on a scanning line occurring at least one line forward relative to a scanning line on which the interpolating pixel exists and on pixel data of a plurality of second pixels on a scanning line occurring at least one line backward relative to the scanning line on which the interpolating pixel exists, including:

> an interpolating angle judging unit to judge an angle, relative to a direction of the scanning line, at which there is a strongest correlation in pixel data between one of the first pixels and one of the second pixels arranged on a line extending from the straight line connecting one of the first pixels and the interpolating pixel; and

wherein, when an absolute value of the angle, which is judged by the interpolating angle judging unit, at which there is a strongest correlation among pixel data is smaller than a predetermined specified value, data for interpolation at the angle at which there is the strongest correlation is blended, at a specified ratio, with data for interpolation at an angle having an absolute value being larger than that of the angle and having a same polarity as the angle.

In the foregoing, a preferable mode is one wherein the pixel data matching degree judging unit judges that there is matching between pixel data on the first reference pixels and pixel data on the second reference pixels when both pixel data on the first reference pixels and pixel data on the second reference pixels are a maximum or minimum value.

Also, a preferable mode is one wherein the interpolating angle judging unit, when specified numbers or less of judgement data blocks for interpolation in an oblique direction exist among successive judgement data blocks for interpolation in a vertical direction, switches judgement for interpolation in an oblique direction to judgement for interpolation in a vertical direction.

Also, a preferable mode is one wherein the interpolating angle judging unit, when specified numbers or less of judgement data blocks for interpolation in a reverse direction exist among successive judgement data blocks for slanting interpolation in same directions, switches from judgement for slanting interpolation in a reverse direction to judgement for interpolation in a vertical direction.

Also, a preferable mode is one wherein the interpolating angle judging unit, when specified numbers or less of judgement data blocks for interpolation in a vertical direction exist among successive two or more judgement data blocks for slanting interpolation in same directions, switches judgement for slanting interpolation in the vertical direction to judgement data for interpolation in same oblique directions.

Also, a preferable mode is one wherein the interpolating angle judging unit counts successive points of judgements for interpolation in same directions and at different angles and, when the successive points are not more than a set value, switches from judgement for slanting interpolation to judgement for interpolation in a vertical direction.

Also, a preferable mode is one wherein, when the interpolating pixel is given as X, a pixel corresponding to the pixel X on the scanning line located one line forward relative to the scanning line on which the interpolating pixel exists is given as A(0), a pixel being adjacent to a left side of the pixel A(0) is given as A(-1), a pixel being adjacent to a right side of the pixel A(0) is given as A(1), a pixel corresponding to the pixel X on the scanning line located one line backward relative to the scanning line on which the interpolating pixel exists is given as B(0), a pixel being adjacent to a left side of the pixel B(0) is given as B(-1) and a pixel being adjacent to a right side of the pixel B(0) is given as B(1), the interpolating angle judging unit, when interpolating judgement for pixels to be interpolated located on a left side or right side of the pixel X is judgement for interpolation in a vertical direction and judgement for interpolation for the pixel X is judgement for slanting interpolation other than judgements for interpolation by using the data on the pixel A(-1) and the pixel B(1) or on the pixel A(1) and the pixel B(-1), switches the judgement for interpolation for the pixel X to the slanting interpolation using the data on the pixel A(-1) and the pixel B(1) or on the pixel A(1) and the pixel B(-1).

According to a fourth aspect of the present invention, there is provided a scanning-line interpolating method to be used for a scanning-line interpolating circuit for creating pixel data for an interpolating pixel based on pixel data of a plurality of first pixels on a scanning line occurring at least one line forward relative to a scanning line on which the interpolating pixel exists and on pixel data of a plurality of second pixels on a scanning line occurring at least one line backward relative to the scanning line on which the interpolating pixel exists, including:

interpolating angle judging processing of judging an angle, relative to a direction of the scanning line, at which there is a strongest correlation between one of pixel data blocks of the first plurality of pixels and one of pixel data blocks of the second plurality of pixels located on a straight line passing through the interpolating pixel;

pixel data matching degree judging processing of judging a degree of matching in pixel data between a first central pixel, out of the plurality of first pixels, located on a scanning line whose direction is same as that of the scanning line on which the interpolating pixel exists and each of first reference pixels including specified pixels occurring on a periphery of the first central pixel and a second central pixel, out of the plurality of second pixels, located on the scanning line whose direction is same as that of the scanning line on which the interpolating pixel exists and each of second reference pixels including specified pixels occurring on a periphery of the second pixels;

wherein, when the degree of matching is higher than a predetermined specified value, interpolation in a direction vertical to a direction of the scanning line on which the interpolating pixel exists is performed and when the degree of matching is smaller than the predetermined specified value, interpolation at an angle, which is judged by the interpolating angle judging processing, in a direction corresponding to an angle providing a strongest correlation in pixel data is performed.

According to a fifth aspect of the present invention, there is provided a scanning-line interpolating method to be used for a scanning-line interpolating circuit for creating pixel data for an interpolating pixel based on pixel data of a plurality of first pixels on a scanning line occurring at least one line forward relative to a scanning line on which the interpolating pixel exists and on pixel data of a plurality of second pixels on a scanning line occurring at least one line backward relative to the scanning line on which the interpolating pixel exists, including:

interpolating angle judging processing of judging an angle, relative to a direction of the scanning line, at which there is a strongest correlation in pixel data between one of the first pixels and one of the second pixels arranged on a line extending from a straight line connecting one of the first pixels with the interpolating pixel;

wherein, in the interpolating angle judging processing, an angle at which there is a strongest correlation among pixel data blocks for interpolation for the interpolating pixel and specified pixels to be interpolated occurring on a periphery of the interpolating pixel on the scanning line on which the interpolating pixel exists is detected and, if the detected first angle at which there is the strongest correlation among pixel data blocks for interpolation of the interpolating pixel has weak correlation with a second angle at which there is the strongest correlation among pixel data blocks for interpolation of pixels occurring on a periphery of the interpolating pixel, the first angle is replaced with an angle providing stronger correlation with the second angle.

According to a sixth aspect of the present invention, there is provided a scanning-line interpolating method to be used for a scanning-line interpolating circuit, for creating pixel data for an interpolating pixel based on pixel data of a plurality of first pixels on a scanning line occurring at least one line forward relative to a scanning line on which the interpolating pixel exists and on pixel data of a plurality of second pixels on a scanning line occurring at least one line backward relative to the scanning line on which the interpolating pixel exists, including:

interpolating angle judging processing of judging an angle, relative to a direction of the scanning line, at which there is strongest correlation among correlations between the first pixels and the second pixels arranged on respective lines extending from straight lines connecting the first pixels and the interpolating pixel;

wherein, when an absolute value of the angle, which is judged by the interpolating angle judging processing, at which there is a strongest correlation among pixel data is smaller than a predetermined specified value, data for interpolation at the angle at which there is the strongest correlation is blended, at a specified ratio, with data for interpolation at an angle having an absolute value being larger than that of the angle and having a same polarity as the angle.

According to a seventh aspect of the present invention, there is provided an image display device having the scanning-line interpolating circuit described above.

BRIEF DESCRIPTION OF THE DRAWINGS

The above and other objects, advantages, and features of the present invention will be more apparent from the following description taken in conjunction with the accompanying drawings in which:

Fig. 1 is a diagram explaining the slanting correlation adaptive-type scanning-line interpolating method;
Fig. 2 is a schematic block diagram for showing electrical configurations of a scanning-line interpolating device disclosed in Patent Reference 1 as a first prior art;
Fig. 3 is a graph showing effects of interpolation obtained by scanning-line interpolating devices disclosed in Patent Reference 1 as the first prior art and Patent Reference 2 as a second prior art;
Fig. 4 is a schematic block diagram for showing electrical configurations of main portions of a scanning-line interpolating circuit according to the first embodiment of the present invention;
Fig. 5 is a block diagram schematically showing one of electrical configurations of an image display device for which the scanning-line interpolating circuit of Fig. 4 is used, according to the first embodiment of the present invention;
Fig. 6 is a diagram explaining actions of an upper and lower matching degree judging section and an interpolating angle correcting section according to the first embodiment of the present invention;
Fig. 7 is a diagram explaining actions of an isolated point removing section according to the first embodiment of the present invention;
Fig. 8 is also a diagram explaining actions of the isolated point removing section according to the first embodiment of the present invention;
Fig. 9 is another diagram explaining actions of the isolated point removing section according to the first embodiment of the present invention;
Fig. 10 is another diagram explaining actions of the isolated point removing section according to the first embodiment of the present invention;
Fig. 11 is yet another diagram explaining actions of the isolated point removing section according to the first embodiment of the present invention;
Fig. 12 is a diagram explaining effects of an interpolating signal blending section according to the first embodiment of the present invention;
Fig. 13 is also a diagram explaining effects of the interpolating signal blending section according to the first embodiment of the present invention; and
Figs. 14A and 14B are diagrams explaining results from a slanting interpolation.

## DETAILED DESCRIPTION OF THE PREFERRED EMBODIMENTS

Best modes of carrying out the present invention will be described in further detail using various embodiments with reference to the accompanying drawings.

According to the scanning-line interpolating circuit of the present invention, pixel data to be used for interpolation of an interpolating pixel is created based on pixel data of a plurality of first pixels on a scanning line occurring at least one line forward relative to a scanning line on which the interpolating pixel exists and on pixel data of a plurality of second pixels on a scanning line occurring at least one line backward relative to the scanning line on which the interpolating pixel exists. More specifically, in the scanning-line interpolating circuit of the present invention, the pixel data to be used for interpolation of the interpolating pixel is created based on 10 pixel data blocks including 5 pixel data blocks that contain one pixel data on the first central pixel, out of the first pixels, located on a scanning line whose direction is the same as for the scanning line on which the interpolating pixel exists and the first reference pixels made up of specified pixels existing on the periphery of the first central pixel, for example, two data blocks of two pixels both being adjacent to the first central pixel in a left direction and two data blocks of two pixels both being adjacent to the first central pixel in a right direction and another 5 pixel data blocks that contain one pixel data on the second central pixel, out of the second pixels, on a scanning line whose direction is the same as for the scanning line on which the interpolating pixel exists and two data blocks of two pixels both being adj acent to the second central pixel in a left direction and two data blocks of two pixels both being adjacent to the second central pixel in a right direction.

Hereinafter, descriptions are made by referring to the interpolating pixel X, the first reference pixels A(-2), A(-1), A(0), A(1), and A(2) and the second reference pixels B(-2), B(-1), B(0), B(1), and B(2) shown in Fig. 1. An angle at which there is a strongest correlation between the data on one of the first pixels arranged on a straight line passing through the interpolating pixel and the data on one of the second pixels, with reference to a direction of the scanning line, is specified by an interpolating angle judging means. Here, it is defined that the nearer an absolute value of a difference, for example, between the first pixel data and the second pixel data or the square of the absolute value comes to 0 (zero), the stronger the correlation in pixel data is. Moreover, a degree of matching between pixel data on the first reference pixels and pixel data on the second reference pixels is judged by a pixel data matching degree judging means and an overall degree of matching between the first reference pixels and the second reference pixels is judged. Here, the meaning that the degree of matching among the first reference pixels is higher than a predetermined specified value represents that all absolute values of differences in pixel data among the first reference pixels adjacent to one another, which is used for interpolation, are smaller than a predetermined specified value. That is, it is defined that, when values of $|A(-2)-A(-1)|$, $|A(-1)-A(0)|$, $|A(0)-A(1)|$, $|A(1)-A(2)|$ are smaller than a specified value "$\alpha$", a degree of matching among the first reference pixels is higher than a predetermined specified value. Furthermore, in some cases, a condition that an absolute value of a difference in pixel data between pixels arranged at both ends of the first reference pixels is smaller than a specified value is added. That is, it is also defined that, when a condition that a value of $|A(-2)-A(2)|$ is higher than a specified value "$\beta$" is satisfied, a degree of matching among the first reference pixels is higher than a predetermined value.

Also, when an absolute value of a difference between a maximum value and minimum value of pixel data on the first reference pixels is smaller than a specified value "$\gamma$", it can be said that the degree of matching among the first reference pixels is higher than a predetermined specified value. It can be defined that the smaller a sum of absolute values of differences among the first reference pixels adjacent to one another or a sum of the square of the absolute values is, the higher the degree of matching is. It is further defined that the smaller a sum of absolute values of differences in mean values of pixel data on the first reference pixels to be used for interpolation among the first reference pixels is, the higher the degree of matching is. Similarly, a degree of matching among the second reference pixels can be defined. That is, it can be defined that, when a degree of matching between the first reference pixels and among the second reference pixels is higher than a predetermined value, an overall degree of matching between the first reference pixels and second reference pixels is higher than the predetermined specified value. If the overall degree of matching is higher than the predetermined specified value, interpolation is performed in a vertical direction relative to the direction of the scanning line and, if the overall degree of matching is smaller than the predetermined specified value, interpolation is performed in a direction corresponding to an angle at which there is the strongest correlation among pixel data, which is judged by the interpolating angle judging means. As a result, in the case in which straight horizontal lines extend successively such as horizontal lines of characters, the interpolation in an oblique direction is limited and, when the same values occur successively in pixels having predetermined numbers or more, for example, in more than three pixels, interpolation in a vertical direction is performed, thus enabling dwindling of horizontal lines to be suppressed.

An angle at which there is the strongest correlation among pixel data blocks for interpolation for an interpolating pixel and pixels to be interpolated occurring on the periphery of the interpolating pixel on the scanning line on which the interpolating pixel exists is detected by the interpolating angle judging means and, if the detected first angle at which there is the strongest correlation among pixel data blocks for interpolation of the interpolating pixel has weak correlation with the second angle at which there is the strongest correlation among pixel data blocks for interpolation of the pixel occurring on the periphery of the interpolating pixel, the first angle is replaced with an angle providing stronger correlation with the second angle. This enables removal of a flicker, bright point, dark point, or a like caused by erroneous judgement of the oblique angle.

When an absolute value of the angle at which there is the strongest correlation among pixel data blocks detected by the interpolating angle judging means is smaller than a predetermined specified value, signals corresponding to interpolation at the angle providing the strongest correlation among pixel blocks are blended, at a specified ratio, with signals corresponding to interpolation at an angle having the same polarity as the angle providing the strongest correlation and having an absolute value being larger than that of the angle providing the strongest correlation. This allows an effect of slanting interpolation at narrower angles to be maintained and enables reduction of edges occurring at a switching point between interpolation in an oblique direction and in a vertical direction, thus enabling smooth display.

First Embodiment

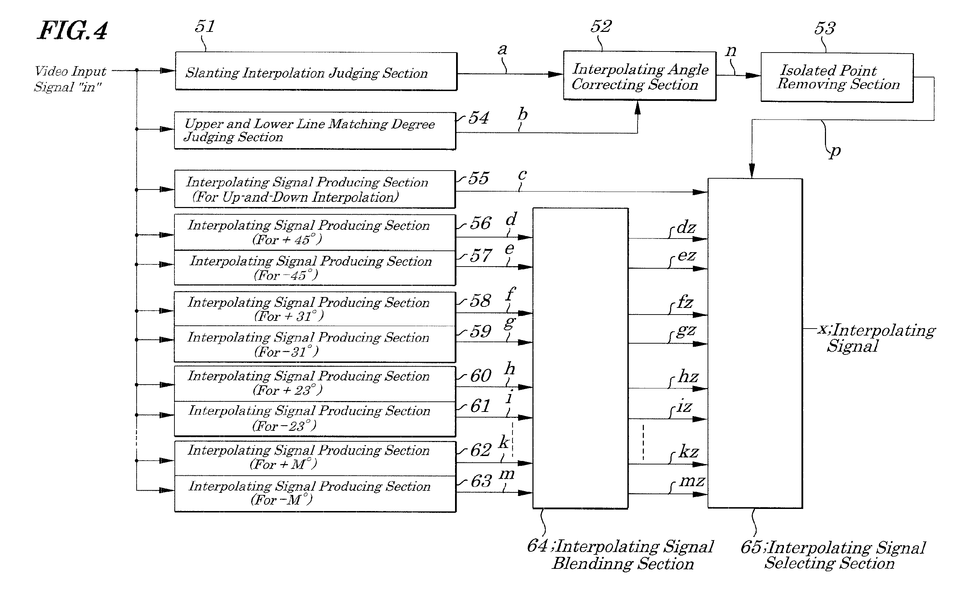

Figure 4 is a block diagram for showing electrical configurations of main portions of a scanning-line interpolating circuit according to the first embodiment of the present invention. As shown in Fig. 4, the scanning-line interpolating circuit of the first embodiment includes a slanting interpolation judging section 51, an interpolating angle correcting section 52, an isolated point removing section 53, an upper and lower line matching degree judging section 54, an interpolating signal producing section (for up-and-down interpolation) 55, an interpolating signal producing section (for +45°) 56, an interpolating signal producing section (for -45°) 57, an interpolating signal producing section (for +31°) 58, an interpolating signal producing section (for -31°) 59, an interpolating signal producing section (for +23°) 60, an interpolating signal producing section (for -23°) 61, an interpolating signal producing sections (for other angles) (not shown), an interpolating signal producing section (for +M°, 0 < M < 23) 62, an interpolating signal producing section (for -M°) 63, an interpolating signal blending section 64, and an interpolating signal selecting section 65.

The slanting interpolation judging section 51 detects, by using a one-line delay means such as a line memory, a direction and a reference direction (for example, a direction of the K-1st or K+1st scanning line out of directions vertical to the K-1st and K+1st scanning lines (for example, up-and-down directions) and a plurality of oblique directions and angles to be formed by the direction where there is the strongest correlation among pixel data blocks to be supplied to a pixel (first pixel) arranged on the K-1st scanning line (for example, a video input upper line in Fig. 1) above the K-th scanning line (K is an integer of 2 or more) on which an interpolating pixel (interpolating pixel) X exists and a pixel (second pixel) arranged on the K+1st scanning line (for example, the vide input lower line) and produces an interpolating angle judging signal "a" representing the detected direction and angle. Moreover, in Fig. 1, an angle obtained by counterclockwise measurement relative to a scanning line is defined as an angle in a plus (+) direction or an angle with a plus (+) polarity and an angle obtained by clockwise measurement relative to a scanning line is defined as an angle in a minus (-) direction or an angle with a minus (-) polarity. In this embodiment, a simply expressed "angle" includes the meaning of the above direction and angle, however, in some cases, for easy understanding, the term "angle" contains the meaning of both an angle and a direction.

The upper and lower line matching degree judging section 54 judges a degree of matching between pixel data A on the first central pixel whose scanning line is in the same direction as for the interpolating pixel X and first reference pixels made up of specified pixels existing in the periphery of the first central pixel and pixel data B on the second central pixel whose scanning line is in the same direction as for the interpolating pixel X and second reference pixels made up of specified pixels existing on the periphery of the second central pixel to produce an interpolating angle judging signal "b". Moreover, according to the first embodiment, the upper and lower line matching degree judging section 54 judges that there is matching between the first reference pixels and the second reference pixels if both pixel data A on the first central pixel and pixel data B on the second central pixel are a maximum value or minimum value.

The interpolating angle correcting section 52 receives an interpolating angle judging signal "b" from the upper and lower line matching degree judging section 54 and corrects, if the interpolating angle judging signal "b" indicates that there is matching between the pixel data A and pixel data B, an interpolating angle judging signal "a" to become an signal corresponding to an angle formed in up-and-down directions relative to the interpolating pixel X and outputs the corrected signal as an interpolating angle judging signal "n". The interpolating angle correcting section 52 outputs, if the interpolating angle judging signal "b" indicates that there is no matching between the pixel data A and pixel data B, the interpolating angle judging signal "a", as it is, without any correction made, as an interpolating angle judging signal "n".

The interpolating signal producing section (for up-and-down interpolation) 55 performs interpolation in up-and-down directions relative to the interpolating pixel X and produces a first interpolating signal "c". The interpolating signal producing section (for +45°) 56 performs interpolation in a direction being slanting (+45°) to the K-1st or K+1st scanning line relative to the interpolating pixel X and produces a second interpolating signal "d". The interpolating signal producing section (for -45°) 57 performs interpolation in a direction being slanting (-45°) to the K-1st or K+1st scanning line relative to the interpolating pixel X and produces a second interpolating signal "e". The interpolating signal producing section (for +31°) 58 performs interpolation in a direction being slanting (+ 31°) to the K-1st or K+1st scanning line relative to the interpolating pixel X and produces a second interpolating signal "f". The interpolating signal producing section (for -31°) 59 performs interpolation in a direction being slanting (- 31°) to the K-1st or K+1st scanning line relative to the interpolating pixel X and produces a second interpolating signal "g".

The interpolating signal producing section (for +23°) 60 performs interpolation in a direction being slanting (+ 23°) to the K-1st or K+1st scanning line relative to the interpolating pixel X and produces a second interpolating signal "h". The interpolating signal producing section (for -23°) 61 performs interpolation in a direction being slanting (-23°) to the K-1st or K+1st scanning line relative to the interpolating pixel X and produces a second interpolating signal "j". The interpolating signal producing section (for other degree) (not shown) performs interpolation in a direction being slanting (at a set angle) to the K-1st or K+1st scanning line relative to the interpolating pixel X and produces a second interpolating signal. The interpolating signal producing section (for +M°) 62 performs interpolation in a direction being slanting (+ M°) to the K-1st or K+1st scanning line relative to the interpolating pixel X and produces a second interpolating signal "k". The interpolating signal producing section (for -M°) 63 performs interpolation in a direction being slanting (- M°) to the K-1st or K+1st scanning line relative to the interpolating pixel X and produces a second interpolating signal "m".

The interpolating signal blending section 64 blends each of the second interpolating signals "d", "e", "f", "g", "h", "j", ⋯, "k", and "m" with each of another second interpolating signals corresponding to interpolation in the same direction as for the second interpolating signals at different angles, at a specified ratio, and produces fourth interpolating signals "dz", "ez", "fz", "gz", "hz", "jz", ⋯, "kz", and "mz". In this embodiment in particular, the interpolating signal blending section 64, when an absolute value of an angle at which there is a strongest correlation among pixels is smaller than a predetermined specified value, blends, at a specified ratio, the above second interpolating signals with signals corresponding to interpolation at an angle with the same polarity as for the above angle at which there is a strongest correlation among pixel data blocks and having an absolute value being larger than that of the angle at which there is the strongest correlation among pixel data blocks. For example, if the predetermined specified value is 45°, the second interpolating signals corresponding to interpolation in an oblique direction at an angle being narrower than 45° are blended with the fourth interpolating signals corresponding to interpolation in an oblique direction at an angle being wider than 45°. The second interpolating signals can be blended with the fourth interpolating signals at the same ratio or at a ratio at which the blending ratio of the second interpolating signals is larger than that of the fourth interpolating signals. The blending ratio to be applied is determined depending on what kind of image quality is expected.

The isolated point removing section 53 removes an isolated point which represents spatially isolated judgement results from the interpolating angle judging signal "n" to be output from the interpolating angle correcting section 52 and produces an interpolating angle judging signal "p". Here, an angle at which there is the strongest correlation for interpolation for an interpolating pixel and pixels existing on the periphery of the interpolating pixel on the scanning line on which the interpolating pixel exists is detected by the interpolating angle judging means and, if the detected first angle at which there is the strongest correlation for interpolation of the interpolating pixel has weak correlation with the second angle at which there is the strongest correlation among pixel data blocks for interpolation of the pixel existing on the periphery of the interpolating pixel, the interpolating angle judging signal "n" corresponding to the first angle to be output from the interpolating angle correcting section 52 is defined as the "spatially isolated judgement result". In such a state, the isolated point removing section 53 switches from the interpolation at the first angle to the interpolation at the second angle at which there is stronger correlation among pixel data blocks. In this embodiment in particular, the isolated point removing section 53 switches judgement data on interpolation, when the interpolating angle judging signal "n" indicates that there are specified numbers or less of judgement data blocks of interpolation in an oblique direction among successive judgement data blocks of interpolation in a vertical direction, from the judgement on interpolation in the oblique direction to the judgement on interpolation in a vertical direction. Also, the isolated point removing section 53 switches judgement on interpolation, when the interpolating angle judging signal "n" indicates that there are specified numbers or less of judgement data blocks of slanting interpolation in a reverse direction among continuous judgement data blocks of interpolation in the same direction, from the judgement on the slanting interpolation in the reverse direction to judgement on interpolation in the vertical direction. Moreover, the isolated point removing section 53 switches judgement on interpolation, when the interpolating angle judging signal "n" indicates that there are specified numbers or more of judgement data blocks of interpolation in the vertical direction among two or more successive judgement data blocks of interpolation in the same direction, from the judgement on interpolation in the vertical direction to the judgement on interpolation in the same oblique direction.

The isolated point removing section 53 counts continuous points in judgement data on interpolation at different angles in the same direction based on the interpolating angle judging signal "n" and switches the judgement on interpolation, when the continuous points are not more than a specified value, from the judgement on interpolation in an oblique direction to the judgement on interpolation in a vertical direction. Now it is presumed that a pixel existing on a scanning line located one line forward relative to a scanning line on which the interpolating pixel (interpolating pixel) X exists and corresponding to the interpolating pixel is the pixel A(0); a pixel adjacent to a left side of the pixel A(0) is the pixel A(-1), a pixel adjacent to a right side of the pixel A(0) is the pixel A(1), a pixel existing on a scanning line located one line backward relative to the scanning line on which the interpolating pixel X exists and corresponding to the interpolating pixel is the pixel B(0), a pixel adjacent to a left side of the pixel B (0) is the pixel B(-1), and a pixel adjacent to a right side of the pixel (0) is the pixel B(1). In such an arrangement as above, the isolated point removing section 53 switches, when the judgement on interpolation indicates that the interpolation in a vertical direction is to be performed on an interpolating pixel which is located on a right side or left side of the pixel X and slanting interpolation not using the combination of the pixel A(-1) and pixel B(1) or the pixel A(1) and pixel B(-1) is to be performed, the judgement on interpolation to slant interpolation on the interpolating pixel X using the combination of the pixel A(-1) and pixel B(1) or of the pixel A(1) and pixel B(-1).

The slanting interpolation judging section 51, interpolating angle correcting section 52, and isolated point removing section 53 make up the interpolating angle judging means. The interpolating angle judging means detects an angle at which there is the strongest correlation for interpolation for an interpolating pixel and pixels to be interpolated existing on the periphery of the interpolating pixel on the scanning line on which the interpolating pixel exists and replaces, if the detected first angle at which there is the strongest correlation for interpolation of the interpolating pixel has weak correlation with the second angle at which there is the strongest correlation for interpolation of the pixels existing on the periphery of the interpolating pixel, the first angle with an angle having stronger correlation with the second angle. The interpolating signal selecting section 65, based on the interpolating angle judging signal "p" fed from the isolated point removing section 53, selects the first interpolating signal "c" or one of the fourth interpolating signals "dz", "ez", "fz", "gz", "hz", "jz", ···, "kz", and "mz" and outputs the third interpolating signal "x" to be used for setting pixel data for the interpolating pixel X.

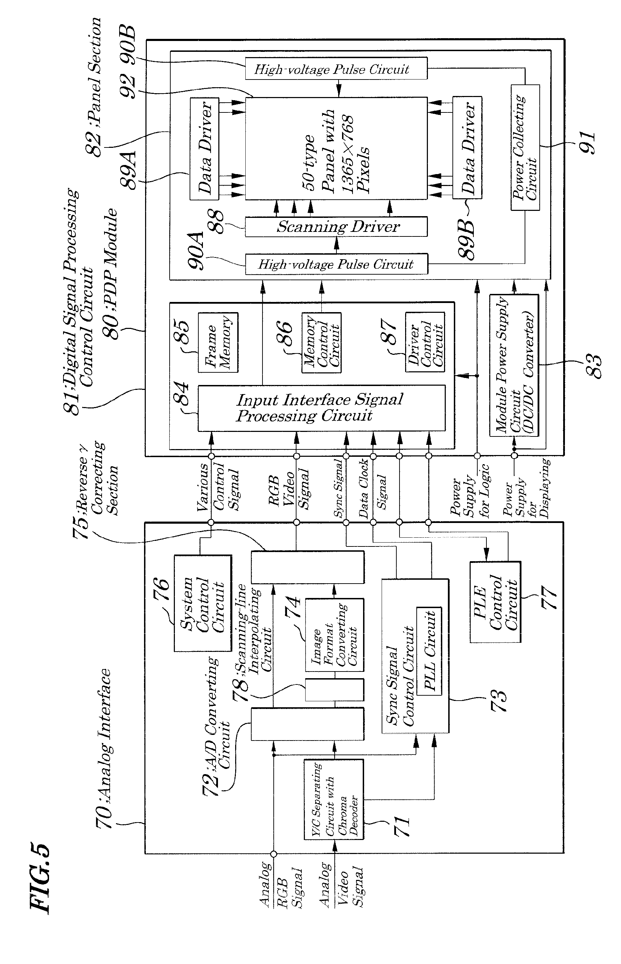

Figure 5 is a block diagram schematically showing one of electrical configurations of an image display device for which the scanning-line interpolating circuit of Fig. 4 is used. The image display device, as shown in Fig. 5, has an analog interface 70 and a PDP (Plasma Display Device) module 80. The analog interface 70 includes a Y/C (luminance signal/color signal) separating circuit 71 having a chroma decoder, an A/D (Analog-to-Digital) converting circuit 72, a sync signal control circuit 73 having a PLL (Phase-Locked-Loop) circuit, an image format converting circuit 74, a reverse $\gamma$ (gamma) correcting circuit 75, a system control circuit 76, a PLE (Peak Luminance Enhancement) controlling circuit 77, and a scanning-line interpolating circuit 78. The scanning-line interpolating circuit 78 has the configurations shown in Fig. 4. The PDP module 80 includes a digital signal processing control circuit 81, a panel section 82, a module power supply circuit 83 with an imbedded DC/DC converter. The digital signal processing control circuit 81 has an input interface signal processing circuit 84, a frame memory 85, a memory control circuit 86, and a driver control circuit 87.

The panel section 82 includes a PDP (Plasma Display Panel) 92, a scanning driver 88 to drive scanning electrodes of the PDP 92, data drivers 89A and 89B to drive data electrodes, high-voltage pulse circuits 90A and 90B to supply a pulse voltage to the PDP 92 and the scanning driver 88, and a power collecting circuit 91 to collect surplus power generated by the high-voltage pulse circuits 90A and 90B.

Briefly, in the above plasma display device, analog video signals corresponding to interlaced scanning are converted by the analog interface 70 into digital video signals, which are then supplied to the PDP module 80. For example, analog video signals output from a TV tuner (not shown) are separated by the Y/C separating circuit 71 into R (Red), G (Green), and B (Blue) luminance signals and are then converted by the A/D converting circuit 72 into digital video signals. Since these digital video signals are signals that correspond to interlaced scanning, pixels are interpolated by the scanning-line interpolating circuit 78 and the signals are converted by the image format converting circuit 74 into video signals of a format that can correspond to sequential scanning.

Also, a characteristic of display luminance of the PDP varies so as to be linearly proportional to input signal, however, a correction ($\gamma$ correction) is made, in advance, to ordinary video signals so as to correspond to a characteristic of a CRT (Cathode Ray Tube). Therefore, after A / D conversion of analog video signals is made by the A/D converting circuit 72, a reverse $\gamma$ correction is made by the reverse $\gamma$ (gamma) correcting circuit 75. In the reverse $\gamma$ correction, digital video signals reconstructed so as to have a linear characteristic are produced. These digital video signals are output to the PDP module 80 as R, G, and B video signals.

Moreover, since a sampling clock and a data clock signal for the A/D conversion are not contained in the analog video signal, the sampling clock and data clock signal are produced by the PLL circuit embedded in the sync signal control circuit 73 based on a horizontal sync signal and are output to the PDP module 80. The PLE control circuit 77 in the analog interface 70 controls luminance to be used in the PDP module 80. More specifically, if an average luminance level is not more than a specified value, display luminance is increased according to the control and, if the average luminance level exceeds the specified value, the display luminance is decreased. In the PLE control circuit 77, luminance control data is set according to an average luminance level and the set data is sent out to a luminance level control circuit (not shown) in the input interface signal processing circuit 84.

Various control signals are sent out from the system control circuit 76 to the PDP module. For example, an average luminance level of each of the R, G, and B video signals input to the input interface signal processing circuit 84 is calculated by an input signal average level calculating circuit (not shown) in the input interface signal processing circuit 84 and is output as, for example, 10 bit data. The various control signals, after being processed by the input interface signal processing circuit 84 in the digital signal processing control circuit 81, are transmitted to the panel section 82. A memory control signal and a driver control signal fed respectively from the memory control circuit 86 and the driver control circuit 87 are sent out to the panel section 82.

The PDP 92 has, for example, 1365x 768 pixels. In the PDP 92, scanning electrodes are controlled by the scanning driver 88 and data electrodes are controlled by the data drivers 89A and 89B so that specified pixels out of the above pixels are turned ON or OFF and display is performed according to the R, G, and B video signals. Power for logic is supplied by the power supply for logic to the digital signal processing control circuit 81 and the panel section 82. DC (Direct Current) power is supplied from the power supply for displaying to the module power supply circuit 83 and a voltage of the DC power is converted into a specified voltage and is then applied to the panel section 82.

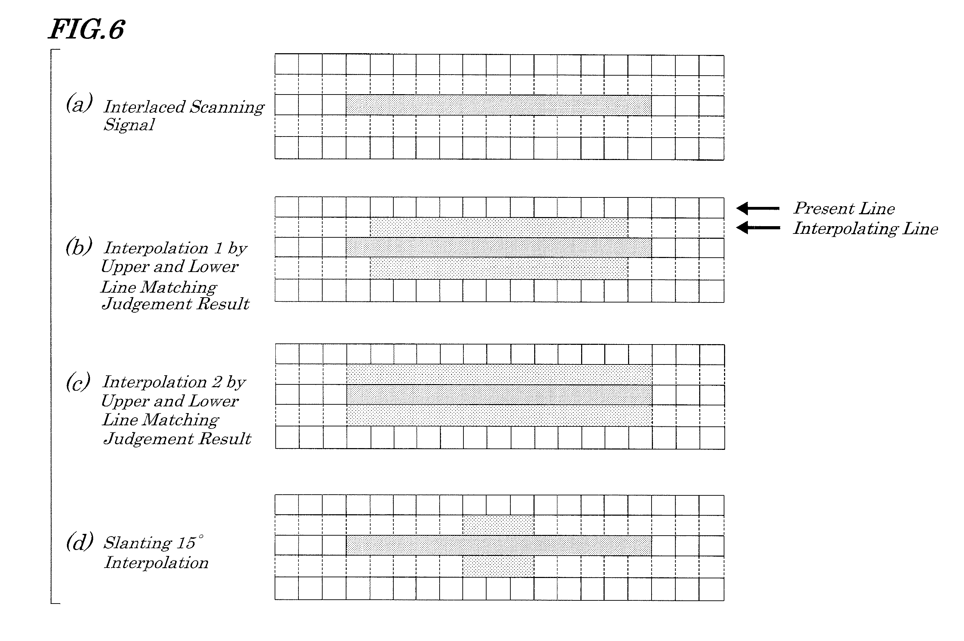

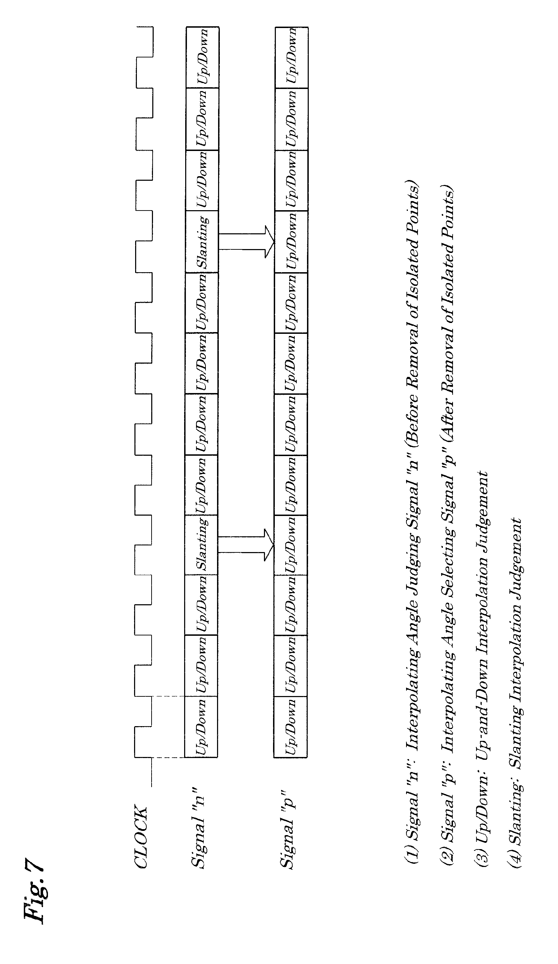

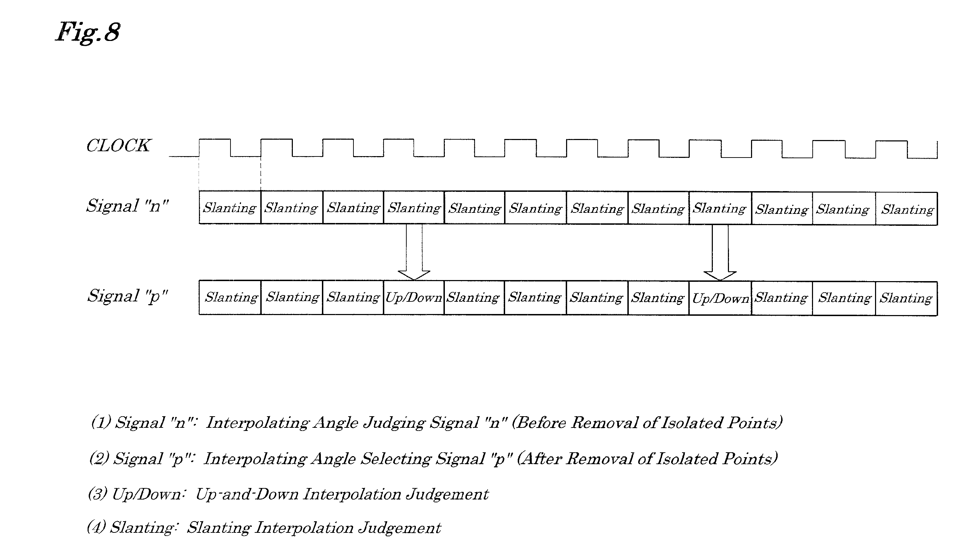

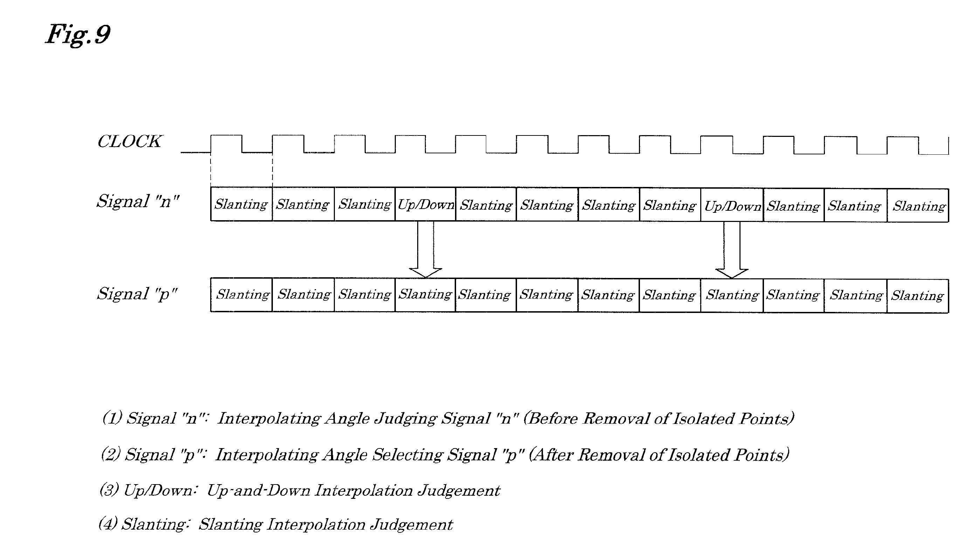

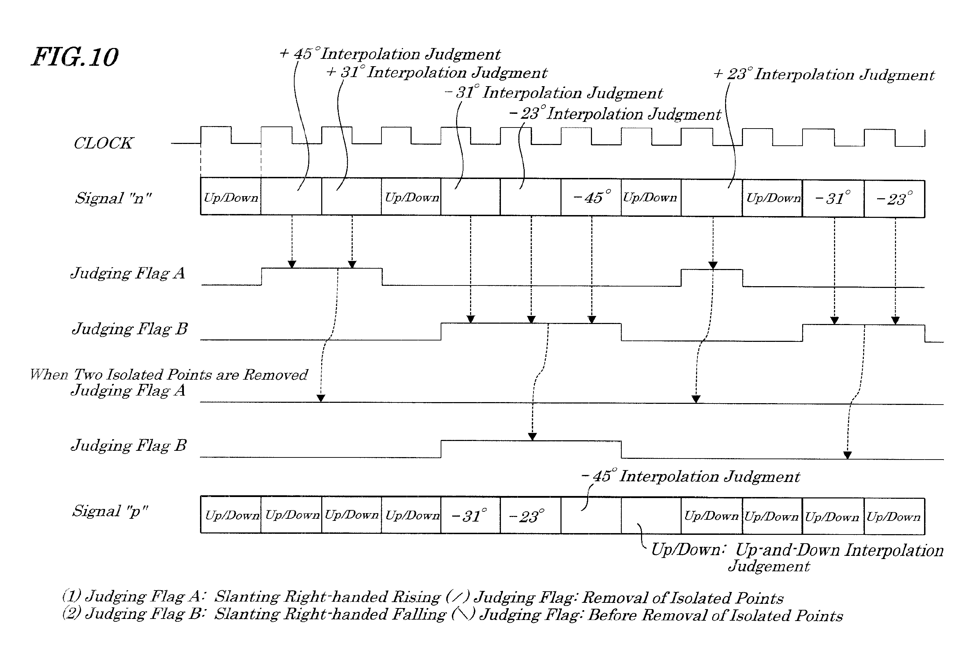

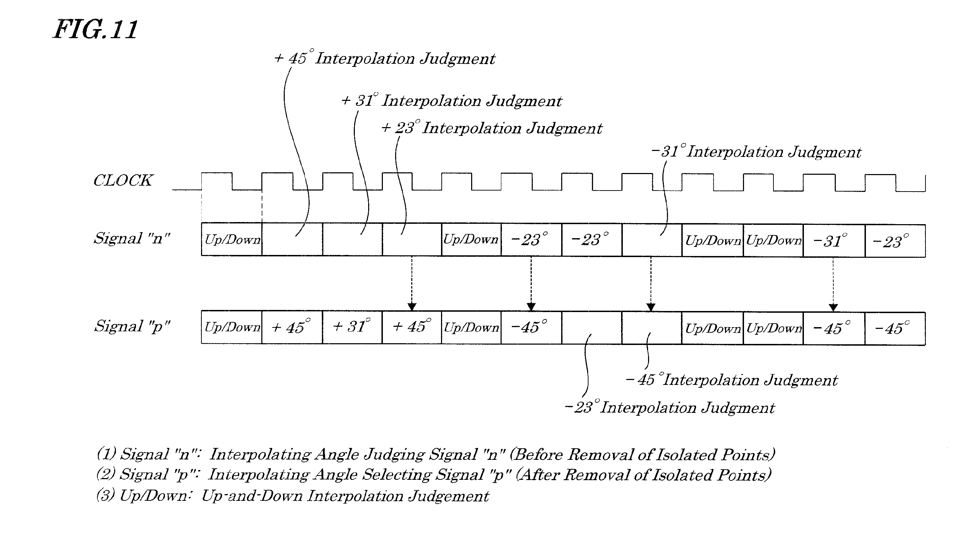

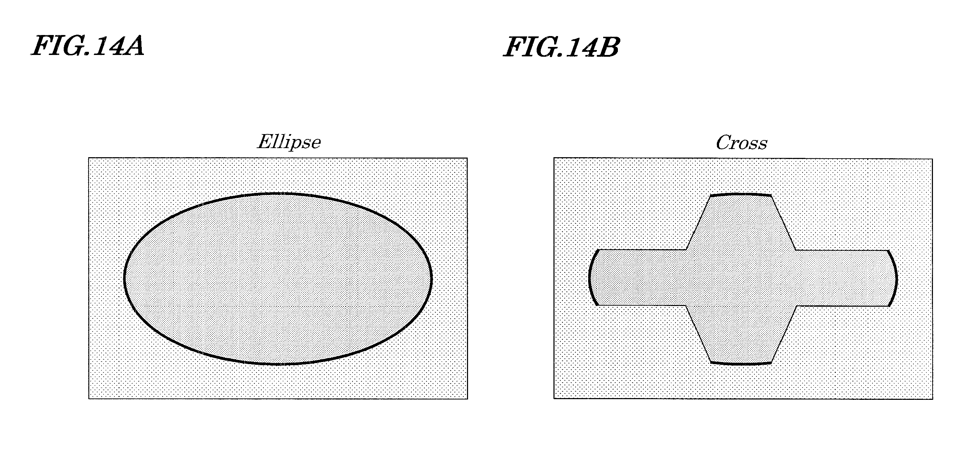

Figure 6 is a diagram explaining actions of an upper and lower line matching degree judging section 54 and an interpolating angle correcting section 52 according to the first embodiment of the present invention. Figure 7 is a diagram explaining actions of an isolated point removing section 53 of the first embodiment. Figure 8 is also a diagram explaining actions of the isolated point removing section 53 of the first embodiment. Figure 9 is a diagram explaining actions of the isolated point removing section 53 according to the first embodiment. Figure 10 is a diagram explaining actions of the isolated point removing section 53 of the first embodiment. Figure 11 is a diagram explaining actions 53 of the isolated point removing section of the first embodiment. Figure 12 is a diagram explaining effects of an interpolating signal blending section 64 of the first embodiment. Figure 13 is also a diagram explaining effects of the interpolating signal blending section 64 of the first embodiment. Figures 14A and 14B are diagrams explaining results from a conventional slanting interpolation. By referring to these drawings, processing of the scanning-line interpolating method to be applied to the scanning-line interpolating circuit of the embodiment is described. In the scanning-line interpolating circuit of the embodiment, pixel data for an interpolating pixel (interpolating pixel) X is created based on pixel data on a plurality of first pixels on a scanning line occurring at least one line forward relative to a scanning line on which the interpolating pixel X exists and on pixel data on a plurality of second pixels on a scanning line occurring at least one line backward relative to the scanning line on which the interpolating pixel X exists.

An angle at which there is the strongest correlation among pixel data blocks is judged using a direction of a scanning line as a reference (interpolating angle judging process). Then, a degree of matching is judged in pixel data between the first central pixel and first reference pixels located on the periphery of the first central pixel, out of the plurality of the first pixels, occurring on the scanning line whose direction is the same as that of the scanning line on which the interpolating pixel X exists and the second central pixel and second reference pixels located on the periphery of the second central pixel, out of the plurality of the second pixels, out of the plurality of the second pixels, occurring on the scanning line whose direction is the same as that of the scanning line on which the interpolating pixel X exists (processing of judging an degree of matching in pixel data). If the above degree of matching is larger than a predetermined specified value, interpolation in a direction vertical to a direction of the scanning line is performed and, if the degree of matching is smaller than the predetermined specified value, interpolation in a direction corresponding to an angle at which there is the strongest correlation in pixel data is performed.

An angle at which there is the strongest correlation among pixel data blocks for interpolation for the interpolating pixel X and for each of pixels to be interpolated occurring on the periphery of the interpolating pixel on the scanning line on which the interpolating pixel X exists is detected by the interpolating angle judging process and, if the detected first angle at which there is the strongest correlation among pixel data blocks for interpolation of the interpolating pixel has weak correlation with the second angle at which there is the strongest correlation among pixel data blocks for interpolation of the pixel occurring on the periphery of the interpolating pixel, the first angle is replaced with an angle providing stronger correlation with the second angle. Moreover, if an absolute value of the angle at which there is the strongest correlation among pixel data blocks judged by the interpolating angle judging process is smaller than a predetermined specified value, signals corresponding to interpolation at the angle providing the strongest correlation are blended, at a specified ratio, with signals for interpolation at an angle having the same polarity as the angle and having an absolute value being larger than that of the angle.

For example, a video input signal "in" being an interlaced scanning signal is input to the slanting interpolation judging section 51 and pixels on the K-1st scanning line and pixels on the K+1st scanning line can be simultaneously obtained. By using information to be obtained by taking a minimum value of differences among pixel combinations including combinations of the up-and-down interpolation between the pixel A(0) and pixel B(0) and of the interpolation at minus (-) angles in an oblique direction between the pixel A(-1) and pixel B(1), between the pixel A(-2) and pixel B(2), between the pixel A(-3) and B(3), ···, between the pixel (-N) and pixel B (N) (N is a positive integer), and of the interpolation at plus (+) angles in oblique directions between the pixel A(1) and pixel B(-1), between the pixel A(2) and pixel B(-2), between the pixel A(3) and pixel (-3), ···, between the pixel A(N) and pixel B(-N) as shown in Fig. 1, a strength of correlation is judged and an interpolating angle judging signal "a" is output.

Also, a video input signal "in" is input to the upper and lower line matching degree judging section 54 and information about the upper and lower lines can be obtained at the same time. Then, in the upper and lower line matching degree judging section 54, if judgement is made by using at least three pixels out of the pixels A(-1), A(0), A(1), and the pixels B(-1), B(0), and B(1) and the following results appear,

$$A(-1) = A(0), \quad A(-1) = A(1), \quad A(0) = A(1) \text{ and}$$

$$B(-1)=B(0), \quad B(-1)=B(1), \quad B(0) = B(1)$$

it is judged that the matching between the pixel data A and pixel data B is found and a one-bit flag (judging signal "b", for example, "1" for matching and "0" for non-matching) is output (pixel data matching degree judging process). Moreover, even if no matching between the upper and lower lines is found, when a center pixel is a maximum or minimum, that is, when the following expressions hold, a "1" is output as a judging signal "b".

$$A(-1) \leqq A(0) \geqq A(1), \quad \text{or } A(-1) \geqq A(0) \leqq A(1), \quad \text{and}$$

$$B(-1) \leqq B(0) \geqq B(1), \quad \text{or } B(-1) \geqq B(0) \leqq B(1)$$

In the interpolating angle correcting section 52, when the judging signal "b" fed from the upper and lower line matching degree judging section 54 is "1", the first interpolating angle judging signal "a" fed from the slanting interpolation judging section 51 is corrected to be a signal corresponding to the up-and-down interpolation (90° interpolation) and an interpolating angle judging signal "n" is output. In this case, for example, as shown in Fig. 6 (a), in the case in which straight horizontal lines such as a horizontal line of characters extend successively in the interlaced scanning signals "in" to be input to the slanting interpolation judging section 51, the interpolation in an oblique direction is limited and control is exerted so that the up-and-down interpolation is performed when the same pixel data of a specified number of pixels or more, for example, the same pixel data of three pixels or more occur successively and, as a result, dwindling of horizontal lines is minimized as shown in Fig. 6 (b). If pixel data on all pixels just below the interpolating pixel X is a maximum value or minimum value, as shown in Fig. 6 (c) (interpolation 2), dwindling of horizontal lines can be fully suppressed. Moreover, when the interpolation in the oblique direction is performed without being controlled, the dwindling of the horizontal lines becomes remarkable as shown in Fig. 6 (d) (slanting 15° interpolation) .

In the interpolating signal producing section (for up-and-down interpolation) 55, by using a mean value of pixel data on the pixel A (0) and pixel B(0), the first interpolating signal "c" is produced. In the interpolating signal producing section (for +45°) 56, by using a mean value of pixel data on the pixel A(1) and pixel B(-1), the second interpolating signal "d" is produced. In the interpolating signal producing section (for -45°) 57, by using a mean value of pixel data on the pixel A(-1) and pixel B(1), the second interpolating signal "e" is produced. In the interpolating signal producing section (for +31°) 58, by using a mean value of pixel data on the pixel A(2) and pixel B (-2), the second interpolating signal "f" is produced. In the interpolating signal producing section (for -31°) 59, by using a mean value of pixel data on the pixel A(-2) and pixel B(2), the second interpolating signal "g" is produced. In the interpolating signal producing section (for +23°) 60, by using a mean value of pixel data on the pixel A(3) and pixel B(-3), the second interpolating signal "h" is produced. In the interpolating signal producing section (for -23°) 61, by using a mean value of pixel data of the pixel A (-3) and pixel B(3), the second interpolating signal "j" is produced.

Assuming that a pixel is square, in general, an angle for interpolation between the pixel A(N) and pixel B(-N) is given by the following expression:

$$ARCTAN[3 \div (2N+1)] \times 180 \div \pi$$

Assuming that an angle for interpolation between the pixel A (N) and pixel B (-N) is +M degrees and an angle for interpolation between the pixel A(-N) and pixel B(N) is -M degrees, in the interpolating signal producing section (for +M degrees) 62, by using a mean value of pixel data on the pixel A (N) and pixel B (-N), the second interpolating signal "k" is produced. In the interpolating signal producing section (for -M degrees) 63, by using a mean value of pixel data of the pixel A (-N) and pixel B (N), the second interpolating signal "m" is produced

The second interpolating signals "d", "e", "f", "g", "h", "j", ···, "k", and "m" are input to the interpolating signal blending section 64 which calculates a mean value of the second interpolating signals "f", "g", "h", "j", "k", ···, and "m" for interpolation at narrow angles except ±45° and interpolating signals for interpolation in the same direction as for the interpolation at narrow angles and at angles being different from the interpolation at the narrow angles to output the fourth interpolating signals "dz", "ez", "fz", "gz", "hz", "jz", ···, "kz", and "mz". For example, by using a mean value of the second interpolating signal "f" output from the interpolating signal producing section (for +31°) 58 and the interpolating signal "d" output from the interpolating signal producing section (for +45°) 56 calculated by the interpolating signal blending section 64, the second interpolating signal "f" is output as the fourth interpolating signal "fz". Moreover, by calculating a weighted mean value of the second interpolating signal "f" from the interpolating signal producing section (for +31°) 58 and the second interpolating signal "d" from the interpolating signal producing section (for +45°) 56, the fourth interpolating signal can be produced. Also, by setting weight between the interpolating signal "f" and the interpolating signal "d" to be, for example, 2:1, an image being nearer to an image produced by an original signal when compared with the use of a simple mean value can be reproduced. On the other hand, by using the simple mean value, in general, a smooth image can be reproduced.

Also, by using a mean value of the second interpolating signal "g" output from the interpolating signal producing section (for -31°) 59 and the interpolating signal "e" output from the interpolating signal producing section (for -45°) 57 calculated by the interpolating signal blending section 64, the second interpolating signal "g" is output as the fourth interpolating signal "gz". By using a mean value of the second interpolating signal "h" output from the interpolating signal producing section (for +23°) 60 and the interpolating signal "f" output from the interpolating signal producing section (for +31°) 58 calculated by the interpolating signal blending section 64, the second interpolating signal "h" is output as the fourth interpolating signal "hz". By using a mean value of the second interpolating signal "i" output from the interpolating signal producing section (for -23°) 61 and the second interpolating signal "g" output from the interpolating signal producing section (for -31°) 59 and the second interpolating signal "e" output from the interpolating signal producing section (for -45°) 57 calculated by the interpolating signal blending section 64, the second interpolating signal "i" is output as the fourth interpolating signal "iz".

An interpolating angle judging signal "n" is input from the interpolating angle correcting section 52 to the isolated point removing section 53 which obtains information about the past and the future contained in the interpolating angle judging signal "n" by using a delay means operating in one pixel unit and detects continuity of interpolating judgements. If an isolated interpolating judgement exists, the isolated interpolating judgement is replaced with the optimum judgement and the interpolating angle judging signal "p" from which isolated points have been removed is output. For example, as shown in Fig. 7, the isolated point removing section 53 checks results of judgement on interpolating angles contained in the interpolating angle judging signal "n" in synchronization with CLOCK signal and, if there is judgement for slanting interpolation among the judgements for the successive up-and-down interpolation, the judgement for the slanting interpolation is replaced with the judgement for the up-and-down interpolation and the interpolating angle judging signal "p" from which the isolated point has been removed is output. Also, as shown in Fig. 8, if there is one point of judgement for slanting interpolation in the reverse direction among the judgements for the slanting interpolation in the same directions, the judgement for the slanting interpolation is replaced with the judgement for the up-and-down interpolation and the interpolating angle judging signal "p" from which the isolated point has been removed is output.

Also, as shown in Fig. 9, if there is one point of judgement for interpolation in the up-and-down interpolation among two or more successive judgements for slanting interpolation in the same direction, the two-or more successive judgements for the slanting interpolation are replaced with the judgement for the slanting interpolation and the interpolating angle judging signal "p" from which the isolated point has been removed is output. As shown in Fig. 10, if successive points of judgements for the slanting interpolation in the same direction and at different angles are detected from the interpolating angle judging signal "n" and, if these successive points are not more than specified value, the judgement for the slanting interpolation is replaced with the judgement for up-and-down interpolation and the interpolating angle judging signal "p" from which the isolated points have been removed is output. As shown in Fig. 11, if the judgement for the slanting interpolation before and after interpolation judgement in the up-and-down direction is the judgement for interpolation other than the ± 45° interpolation, the judgement is replaced with the ± 45° interpolation and the interpolating angle judging signal "p" from which the isolated points have been removed is output (interpolating angle judging process).

The interpolating signal selecting section 65 selects, based on the interpolating signal "p" fed from the isolated point removing section 53, one of the first interpolating signal "c" fed from the interpolating signal producing section (for up-and-down interpolation) 55 and fourth interpolating signals "dz", "ez", "fz", "gz", "hz", "jz", ···, "kz", and "mz" fed from the interpolating signal blending section 64 and outputs the selected signal as the third interpolating signal x.

Figure 12 and 13 show effects of the interpolating signal blending section 64 and a pixel number is plotted as abscissa and pixel data as ordinate. In Figs. 12 and 13, the "upper line" and "lower line" shown by broken lines represent input interlaced scanning signal "in" and other lines shown by broken lines represent interpolating signals produced by using the "upper line" and "lower line". The "up-and-down interpolating line" shown by the broken line is plotted by using mean values of pixel data blocks at two points using pixels located in a vertical direction on the upper and lower lines being symmetric with respect to a point of an interpolating pixel X. The "slanting 45° interpolating line" shown by a broken line is plotted by using mean values of pixel data blocks at two points using pixels out of three pixels, each being a square pixel, located in an oblique direction on the upper and lower lines being symmetric with respect to a point of the interpolating pixel X. The "slanting 15° interpolating line" shown by a broken line is plotted by using mean values of pixel data blocks at two points using pixels existing in an outermost place out of 11 pixels, each being a square pixel, located on the upper and lower lines being symmetric with respect to a point of the interpolating pixel X. The "blend interpolating line" shown by a broken line is plotted by using a mean value of pixel data blocks obtained by blending data for interpolation in the same direction and at different angles (that is, from slanting 45° and 15° interpolation).

As shown in Fig. 12, by performing the blend interpolation, the same effect of the interpolation as obtained by 15° interpolation is achieved and the most smooth slanting lines are created and, moreover, the effect of the blend interpolation in an oblique direction is improved when compared with the effect of the conventional blend interpolation shown in Fig. 3. Also, as shown in Fig. 13, the 15° interpolation line shown by the broken line becomes almost a horizontal line in a portion in which the judgement of the slanting interpolation for a portion in which the upper and lower lines has a slant remains effective and rises sharply immediately before a portion where the judgement for slanting interpolation is interrupted in a center of Fig. 13 and the 15° interpolation line is in the same state as the up-and-down interpolation line. In this case, as shown in Fig. 14A, by performing slanting interpolation, an ellipse being an original shape becomes a cross as shown in Fig. 14B. On the other hand, the blend interpolation line shown by the broken line provides a line that maintains a state in which the slant of the upper and lower line is almost the same in a time period during which the slanting interpolation remains effective and even in a switching portion in which the slanting interpolation is interrupted and the up-and-down interpolation begins, smooth switching occurs.

Thus, according to the first embodiment, a degree of matching between pixel data A on three pixels or more existing on the K-1st scanning line located forward relative to the scanning line on which the interpolating pixel X exists and pixel data B on three pixels or more existing on the K+1st scanning line located downward relative to the scanning line on which the interpolating pixel X exists is judged by the upper and lower line matching degree judging section 54 to produce a judging signal "b" and, when the judging signal "b" shows matching between the pixel A and B, the interpolating angle judging signal "a" fed from the slanting interpolation judging section 51 is corrected by the interpolating angle correcting section 52 so as to become a signal corresponding to an angle in up-and-down directions relative to the interpolating pixel X and is output as the interpolating angle judging signal "n" and, therefore, even when horizontal lines occur successively, dwindling of the horizontal lines can be suppressed.

Moreover, according to the first embodiment, in the isolated point removing section 53, continuity of interpolation judgement in the interpolating signal "n" fed from the interpolating angle correcting section 52 is checked and, if isolated judgements for interpolation exists, the isolated judgement is replaced with an optimum judgement for interpolation and the interpolating angle judging signal "p" from which the isolated point has been removed is output and, therefore, a flicker, bright point, and dark point caused by erroneous judgement of the oblique angle can be removed. Also, a mean value of the second interpolating signals for interpolation at narrow angles except $\pm$ 45° and interpolating signals for interpolation in the same direction as for the interpolation at narrow angles and at angles being different from the interpolation at the narrow angles is calculated by the interpolating signal blending section 64 to output the fourth interpolating signals "dz", "ez", "fz", "gz", "hz", "jz", ···, "kz", and "mz" and, therefore, while the effect of the slanting interpolation at narrow angles is being maintained, edges occurring at switching points between the slanting interpolation and up-and-down interpolation can be reduced, thus allowing smooth display.

Second Embodiment

In the scanning-line interpolating circuit of the second embodiment, the interpolating signal blending section 64 employed in the first embodiment shown in Fig. 1 is removed and the interpolating signal producing sections 56, 57, ···, 62, and 63 are connected to the interpolating signal selecting section 65. In the second embodiment, in the isolated point removing section 53, results of judgement on interpolating angles contained in the interpolating angle judging signal "n" in synchronization with a CLOCK signal are checked and, as shown in Fig. 11 of the first embodiment, when the judgement for the slanting interpolation to be performed before and after the up-and-down direction is the interpolation at angles except $\pm$ 45°, the judgement for interpolation is replaced with the interpolation at the angle of $\pm$ 45° and the interpolating signal "p" is output and, therefore, while the effect of the slanting interpolation at a plurality of angles is being maintained, edges occurring at switching points between the slanting interpolation and up-and-down interpolation can be reduced, thus allowing smooth display. As a result, the same advantages as in the case of having the interpolating signal blending section 64 can be obtained.

It is apparent that the present invention is not limited to the above embodiments but may be changed and modified without departing from the scope and spirit of the invention. For example, in the above embodiments, pixel data for the interpolating pixel X is created based on pixel data on the plurality of first pixels on the scanning line located one line forward relative to the scanning line on which the interpolating pixel X exists and on pixel data on the plurality of second pixels on the scanning lines located one line backward relative to the scanning line on which the interpolating pixel X exists, however, by using pixel data based on pixels on the scanning line located a plurality of lines forward and backward relative to the scanning line on which the interpolating pixel X exists, the accuracy of interpolation can be improved.

Also, the interpolating signal blending section 64 may be configured that a given number of interpolating processes out of processes of interpolation to be performed at angles between 45° to M° is omitted depending on the circuit scale of the interpolating signal blending section 64. In the above embodiment, the interpolating signal blending section 64 is configured so that signals for interpolation at narrower angle except ± 45° (except second interpolating signals "d" and "e") are blended with signals for interpolation in the same direction and at different angles, however, the interpolating signal blending section 64 may be so configured that the blending ratio is adjusted, for example, depending on superiority or inferiority of the third interpolating signal "x" to output the fourth interpolating signals "dz", "ez", "fz", "gz", "hz", "jz", ···, "kz", and "mz".

Also, so long as the interpolating signal blending section 64 exists, the interpolating angle correcting section 52, interpolating point removing section 53, upper and lower line matching degree judging section 54 shown in Fig. 4 may be removed. Advantages can be obtained only by the interpolating signal blending section 64. Moreover, the present invention can be applied not only to plasma display devices but also to general image display devices such as liquid crystal display devices, EL (Electroluminescence) display devices, CRT display devices of a progressive scanning method which use video display signals obtained by converting interlaced scanning signals into progressive signals. In the above embodiments, the example is shown in which the interlaced scanning signals are converted into progressive signals, however, the technology employed in the present invention can be applied to the case in which interpolating signals are produced so that the display screen provides high resolution.

According to one embodiment, there is provided a scanning-line interpolating circuit (78) is provided which is capable of reducing jaggies on slanting lines and of keeping smoothness of interpolating signals achieved by using slanting lines having multiple angles for interpolation and of suppressing failures in displaying caused by erroneous judgement. When it is judged that there is matching in pixel data between three pixels or more on an upper line and three pixels or more on a lower line,

an interpolating angle judging signal (a) is corrected to be another interpolating angle judging signal (n) corresponding to interpo- lation in up-and-down directions and isolated point is removed and another interpolating angle judging signal (p) is output. Interpolating signals (d,..., m) are blended with other interpolating signals corresponding to interpolation in same directions and at different angles and another interpolating signals (dz,..., mz) are produced. One of second interpolating signals (c, dz,..., mz) is selected based on the interpolating angle judging signal (p) and an interpolating signal (x) is produced.

**Claims**

1.  A scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

    an interpolating angle judging unit (51, 52, 53) to judge an angle, relative to a direction of said scanning line on which said interpolating pixel exists, at which there is a strongest correlation between one of pixel data blocks of said first plurality of pixels and one of pixel data blocks of said second plurality of pixels located on a straight line passing through said interpolating pixel; and
    a pixel data matching degree judging unit (54) to judge a degree of matching in pixel data between a first central pixel, out of said plurality of first pixels, located on a scanning line whose direction is same as that of said scanning line on which said interpolating pixel exists and each of first reference pixels comprising specified pixels occurring on a periphery of said first central pixel and a second central pixel, out of said plurality of second pixels, located on said scanning line whose direction is same as that of said scanning line on which said interpolating pixel exists and each of second reference pixels comprising specified pixels occurring on a periphery of said second pixels, and
    wherein, when said degree of matching is higher than a predetermined specified value, interpolation in a direction vertical to a direction of said scanning line on which said interpolating pixel exists is performed and when said degree of matching is smaller than said predetermined specified value, interpolation at an angle, judged by said interpolating angle judging unit (51, 52, 53), in a direction corresponding to an angle providing a strongest correlation in pixel data is performed.

2. A scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

an interpolating angle judging unit (51, 52, 53) to judge an angle, relative to a direction of said scanning line on which said interpolating pixel exists, at which there is a strongest correlation between one of pixel data blocks of said first plurality of pixels and one of pixel data blocks of said second plurality of pixels located on a straight line passing through said interpolating pixel; and
wherein said interpolating angle judging unit (51, 52, 53) detects an angle at which there is a strongest correlation among pixel data blocks for interpolation for said interpolating pixel and specified pixels to be interpolated occurring on a periphery of said interpolating pixel on said scanning line on which said interpolating pixel exists and, if the detected first angle at which there is the strongest correlation among pixel data blocks for interpolation of said interpolating pixel has a weak correlation with a second angle at which there is the strongest correlation among pixel data blocks for interpolation of pixels to be interpolated occurring on a periphery of said interpolating pixel, said first angle is replaced with an angle providing a stronger correlation with said second angle.

3. A scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

an interpolating angle judging unit (51, 52, 53) to judge an angle, relative to a direction of said scanning line, at which there is a strongest correlation in pixel data between one of the first pixels and one of the second pixels arranged on a line extending from the straight line connecting one of said first pixels and said interpolating pixel; and
wherein, when an absolute value of said angle, which is judged by said interpolating angle judging unit (51, 52, 53), at which there is a strongest correlation among pixel data is smaller than a predetermined specified value, data for interpolation at said angle at which there is the strongest correlation is blended, at a specified ratio, with data for interpolation at an angle having an absolute value being larger than that of said angle and having a same polarity as said angle.

4. The scanning-line interpolating circuit (78) according to Claim 1, wherein said pixel data matching degree judging unit (54) judges that there is matching between pixel data on said first reference pixels and pixel data on said second reference pixels when both pixel data on said first reference pixels and pixel data on said second reference pixels are a maximum or minimum value.

5. The scanning-line interpolating circuit (78) according to Claim 2, wherein said interpolating angle judging unit (51, 52, 53), when specified numbers or less of judgement data blocks for interpolation in an oblique direction exist among successive judgement data blocks for interpolation in a vertical direction, switches judgement for interpolation in an oblique direction to judgement for interpolation in the vertical direction.

6. The scanning-line interpolating circuit (78) according to Claim 2, wherein said interpolating angle judging unit (51, 52, 53), when specified numbers or less of judgement data blocks for interpolation in a reverse direction exist among successive judgement data blocks for slanting interpolation in same directions, switches from judgement for slanting interpolation in a reverse direction to judgement for interpolation in the vertical direction.

7. The scanning-line interpolating circuit (78) according to Claim 2, wherein said interpolating angle judging unit (51, 52, 53), when specified numbers or less of judgement data blocks for interpolation in a vertical direction exist among successive two or more judgement data blocks for slanting interpolation in same directions, switches judgement for slanting interpolation in the vertical direction to judgement data for interpolation in same oblique directions.

8. The scanning-line interpolating circuit (78) according to Claim 2, wherein said interpolating angle judging unit (51, 52, 53) counts successive points of judgements for interpolation in same directions and at different angles and, when the successive points are not more than a set value, switches from judgement for slanting interpolation to judgement for interpolation in the vertical direction.

9. The scanning-line interpolating circuit (78) according to Claim 2, wherein, when said interpolating pixel is given as X, a pixel corresponding to the pixel X on said scanning line located one line forward relative to said scanning line on which said interpolating pixel exists is given as A(0), a pixel being adjacent to a left side of the pixel A(0) is given as A(-1), a pixel being adjacent to a right side of said pixel A(0) is given as A(1), a pixel corresponding to said pixel X on said scanning line located one line backward relative to said scanning line on which said interpolating pixel exists is given as B(0), a pixel being adjacent to a left side of the pixel B (0) is given as B(-1) and a pixel being adjacent to a right side of said pixel B(0) is given as B(1), said interpolating angle judging unit (51, 52, 53), when interpolating judgement for pixels to be interpolated located on a left side or right side of said pixel X is judgement for interpolation in the vertical direction and judgement for interpolation for said pixel X is judgement for slanting interpolation other than judgements for interpolation by using the data on the pixel A(-1) and the pixel B(1) or on the pixel A(1) and the pixel B(-1), switches the judgement for interpolation for said pixel X to the slanting interpolation using the data on said pixel A(-1) and said pixel B(1) or on said pixel A(1) and said pixel B(-1).

10. A scanning-line interpolating method to be used for a scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

interpolating angle judging processing of judging an angle, relative to a direction of said scanning line, at which there is a strongest correlation between one of pixel data blocks of said first plurality of pixels and one of pixel data blocks of said second plurality of pixels located on a straight line passing through said interpolating pixel; pixel data matching degree judging processing of judging a degree of matching in pixel data between a first central pixel, out of said plurality of first pixels, located on a scanning line whose direction is same as that of said scanning line on which said interpolating pixel exists and each of first reference pixels comprising specified pixels occurring on a periphery of said first central pixel and a second central pixel, out of said plurality of second pixels, located on said scanning line whose direction is same as that of said scanning line on which said interpolating pixel exists and each of second reference pixels comprising specified pixels occurring on a periphery of said second pixels; and wherein, when said degree of matching is higher than a predetermined specified value, interpolation in a direction vertical to a direction of said scanning line on which said interpolating pixel exists is performed and when said degree of matching is smaller than said predetermined specified value, interpolation at an angle, which is judged by said interpolating angle judging processing, in a direction corresponding to an angle providing a strongest correlation in pixel data is performed.

11. A scanning-line interpolating method to be used for a scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

interpolating angle judging processing of judging an angle, relative to a direction of said scanning line, at which there is a strongest correlation in pixel data between one of the first pixels and one of the second pixels arranged on a line extending from a straight line connecting one of said first pixels with said interpolating pixel; and wherein, in said interpolating angle judging processing, an angle at which there is a strongest correlation among pixel data blocks for interpolation for said interpolating pixel and specified pixels to be interpolated occurring on a periphery of said interpolating pixel on said scanning line on which said interpolating pixel exists is detected and, if the detected first angle at which there is the strongest correlation among pixel data blocks for interpolation of said interpolating pixel has weak correlation with a second angle at which there is the strongest correlation among pixel data blocks for interpolation of pixels occurring on a periphery of said interpolating pixel, said first angle is replaced with an angle providing stronger correlation with said second angle.

12. A scanning-line interpolating method to be used for a scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

interpolating angle judging processing of judging an angle, relative to a direction of said scanning line, at which there is strongest correlation among correlations between pixel data for the first pixels and pixel data for the second pixels arranged on respective lines extending from straight lines connecting said first pixels and said interpolating pixel; and

wherein, when an absolute value of said angle, which is judged by said interpolating angle judging processing, at which there is a strongest correlation among pixel data is smaller than a predetermined specified value, data for interpolation at said angle at which there is the strongest correlation is blended, at a specified ratio, with data for interpolation at an angle having an absolute value being larger than that of said angle and having a same polarity as said angle.

**13.** An image display device having the scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

an interpolating angle judging unit (51, 52, 53) to judge an angle, relative to a direction of said scanning line on which said interpolating pixel exists, at which there is a strongest correlation between one of pixel data blocks of said first plurality of pixels and one of pixel data blocks of said second plurality of pixels located on a straight line passing through said interpolating pixel; and

a pixel data matching degree judging unit (54) to judge a degree of matching in pixel data between a first central pixel, out of said plurality of first pixels, located on a scanning line whose direction is same as that of said scanning line on which said interpolating pixel exists and each of first reference pixels comprising specified pixels occurring on a periphery of said first central pixel and a second central pixel, out of said plurality of second pixels, located on said scanning line whose direction is same as that of said scanning line on which said interpolating pixel exists and each of second reference pixels comprising specified pixels occurring on a periphery of said second pixels, and

wherein, when said degree of matching is higher than a predetermined specified value, interpolation in a direction vertical to a direction of said scanning line on which said interpolating pixel exists is performed and when said degree of matching is smaller than said predetermined specified value, interpolation at an angle, judged by said interpolating angle judging unit (51, 52, 53), in a direction corresponding to an angle providing a strongest correlation in pixel data is performed.

**14.** An image display device having the scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

an interpolating angle judging unit (51, 52, 53) to judge an angle, relative to a direction of said scanning line on which said interpolating pixel exists, at which there is a strongest correlation between one of pixel data blocks of said first plurality of pixels and one of pixel data blocks of said second plurality of pixels located on a straight line passing through said interpolating pixel; and

wherein said interpolating angle judging unit (51, 52, 53) detects an angle at which there is a strongest correlation among pixel data blocks for interpolation for said interpolating pixel and specified pixels to be interpolated occurring on a periphery of said interpolating pixel on said scanning line on which said interpolating pixel exists and, if the detected first angle at which there is the strongest correlation among pixel data blocks for interpolation of said interpolating pixel has a weak correlation with a second angle at which there is the strongest correlation among pixel data blocks for interpolation of pixels to be interpolated occurring on a periphery of said interpolating pixel, said first angle is replaced with an angle providing a stronger correlation with said second angle.

**15.** An image display device having the scanning-line interpolating circuit (78) for creating pixel data for an interpolating pixel based on pixel data of a plurality of first pixels on a scanning line occurring at least one line forward relative to a scanning line on which said interpolating pixel exists and on pixel data of a plurality of second pixels on a scanning line occurring at least one line backward relative to said scanning line on which said interpolating pixel exists, **characterized by** comprising:

an interpolating angle judging unit (51, 52, 53) to judge an angle, relative to a direction of said scanning line, at which there is a strongest correlation in pixel data between one of the first pixels and one of the second pixels arranged on a line extending from the straight line connecting one of said first pixels and said interpolating pixel; and

wherein, when an absolute value of said angle, which is judged by said interpolating angle judging unit (51, 52, 53), at which there is a strongest correlation among pixel data is smaller than a predetermined specified value, data for interpolation at said angle at which there is the strongest correlation is blended, at a specified ratio, with data for interpolation at an angle having an absolute value being larger than that of said angle and having a same polarity as said angle.

FIG.1 (RELATED ART)

FIG.2 (RELATED ART)

**17;One-pixel Delay Circuit**

Video
Input
Signal

**48;Minimum Value
Detecting Circuit**

1

A(3)  A(2)  A(1)  A(0)  A(-1)  A(-2)  A(-3)

16  15  14  13  12  11

31

41

32

42

33

43

34

44

35

45

36

46

37

47

MIN

EP 1 758 378 A2

21  22  23  24  25  26  27;One-pixel
Delay Circuit

B(-3)  B(-2)  B(-1)  B(0)  B(1)  B(2)  B(3)

X

**49;Interpolating Signal
Selecting Circuit**

# FIG.3 (RELATED ART)

EP 1 758 378 A2

**FIG.4**

Video Input Signal "in"

51 — Slanting Interpolation Judging Section → $a$

52 — Interpolating Angle Correcting Section → $n$

53 — Isolated Point Removing Section

54 — Upper and Lower Line Matching Degree Judging Section → $b$

55 — Interpolating Signal Producing Section (For Up-and-Down Interpolation) → $c$

56 — Interpolating Signal Producing Section (For $+45°$) → $d$

57 — Interpolating Signal Producing Section (For $-45°$) → $e$

58 — Interpolating Signal Producing Section (For $+31°$) → $f$

59 — Interpolating Signal Producing Section (For $-31°$) → $g$

60 — Interpolating Signal Producing Section (For $+23°$) → $h$

61 — Interpolating Signal Producing Section (For $-23°$) → $i$

62 — Interpolating Signal Producing Section (For $+M°$) → $k$

63 — Interpolating Signal Producing Section (For $-M°$) → $m$

→ $dz$ → $ez$ → $fz$ → $gz$ → $hz$ → $iz$ → $kz$ → $mz$

$p$

$x$;Interpolating Signal

64;Interpolating Signal Blendinng Section

65;Interpolating Signal Selecting Section

EP 1 758 378 A2

23

**FIG.5**

70 ;Analog Interface

75 ;Reverse γ Correcting Section

81 ;Digital Signal Processing Control Circuit

80 ;PDP Module

82 ;Panel Section

89A

92 90B

76 — System Control Circuit

72 ;A/D Converting Circuit

78 ;Scanning-line Interpolating Circuit

74

71 — Y/C Separating Circuit with Chroma Decoder

73

Sync Signal Control Circuit — PLL Circuit

Image Format Converting Circuit

77 — PLE Control Circuit

Various Control Signal

RGB Video Signal

Sync Signal

Data Clock Signal

Power Supply for Logic

Power Supply for Displaying

Analog RGB Signal

Analog Video Signal

84 — Input Interface Signal Processing Circuit

85 — Frame Memory

86 — Memory Control Circuit

87 — Driver Control Circuit

90A

88

89A — Data Driver

High-voltage Pulse Circuit

Scanning Driver

50-type Panel with 1365×768 Pixels

High-voltage Pulse Circuit

89B — Data Driver

Module Power Supply Circuit (DC/DC Converter)

Power Collecting Circuit

83

91

EP 1 758 378 A2

# FIG.6

(a) Interlaced Scanning Signal

(b) Interpolation 1 by Upper and Lower Line Matching Judgement Result

← Present Line
← Interpolating Line

(c) Interpolation 2 by Upper and Lower Line Matching Judgement Result

(d) Slanting 15° Interpolation

EP 1 758 378 A2

EP 1 758 378 A2

*Fig. 7*

| CLOCK | | | | | | | | | | | | |
|---|---|---|---|---|---|---|---|---|---|---|---|---|

Signal "n"

| Up/Down | Up/Down | Up/Down | Slanting | Up/Down | Up/Down | Up/Down | Up/Down | Slanting | Up/Down | Up/Down | Up/Down |
|---|---|---|---|---|---|---|---|---|---|---|---|

Signal "p"

| Up/Down | Up/Down | Up/Down | Up/Down | Up/Down | Up/Down | Up/Down | Up/Down | Up/Down | Up/Down | Up/Down | Up/Down |
|---|---|---|---|---|---|---|---|---|---|---|---|

(1) Signal "n": Interpolating Angle Judging Signal "n" (Before Removal of Isolated Points)

(2) Signal "p": Interpolating Angle Selecting Signal "p" (After Removal of Isolated Points)

(3) Up/Down: Up-and-Down Interpolation Judgement

(4) Slanting: Slanting Interpolation Judgement

*Fig.8*

(1) Signal "n": Interpolating Angle Judging Signal "n" (Before Removal of Isolated Points)

(2) Signal "p": Interpolating Angle Selecting Signal "p" (After Removal of Isolated Points)

(3) Up/Down: Up-and-Down Interpolation Judgement

(4) Slanting: Slanting Interpolation Judgement

EP 1 758 378 A2

*Fig.9*

CLOCK

| Signal "n" | Slanting | Slanting | Slanting | Up/Down | Slanting | Slanting | Slanting | Slanting | Up/Down | Slanting | Slanting | Slanting |

| Signal "p" | Slanting | Slanting | Slanting | Slanting | Slanting | Slanting | Slanting | Slanting | Slanting | Slanting | Slanting | Slanting |

(1) Signal "n": Interpolating Angle Judging Signal "n" (Before Removal of Isolated Points)

(2) Signal "p": Interpolating Angle Selecting Signal "p" (After Removal of Isolated Points)

(3) Up/Down: Up-and-Down Interpolation Judgement

(4) Slanting: Slanting Interpolation Judgement

EP 1 758 378 A2

**FIG.10**

+ 45°Interpolation Judgment
+ 31°Interpolation Judgment
− 31° Interpolation Judgment
− 23° Interpolation Judgment
+ 23° Interpolation Judgment

CLOCK

Signal "n"

| Up/Down | | | Up/Down | | | −45° | Up/Down | | Up/Down | −31° | −23° |

Judging Flag A

Judging Flag B

When Two Isolated Points are Removed
Judging Flag A

Judging Flag B

− 45° Interpolation Judgment

Signal "p"

| Up/Down | Up/Down | Up/Down | Up/Down | −31° | −23° | | | Up/Down | Up/Down | Up/Down | Up/Down |

Up/Down: Up-and-Down Interpolation Judgement

(1) Judging Flag A: Slanting Right-handed Rising (∕) Judging Flag: Removal of Isolated Points
(2) Judging Flag B: Slanting Right-handed Falling (∖) Judging Flag: Before Removal of Isolated Points

EP 1 758 378 A2

# FIG.11

(1) Signal "n": Interpolating Angle Judging Signal "n" (Before Removal of Isolated Points)
(2) Signal "p": Interpolating Angle Selecting Signal "p" (After Removal of Isolated Points)
(3) Up/Down: Up-and-Down Interpolation Judgement

EP 1 758 378 A2

FIG.12

FIG.13

*FIG.14B*

Cross

*FIG.14A*

Ellipse

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005245978 A
- JP 2003018397 A

- JP 2002185934 A